# EUROPEAN PATENT APPLICATION

(11) **EP 4 394 739 A1**
(43) Date of publication of application: **03.07.2024**
(21) Application number: 21958734.2
(22) Date of filing: 29.09.2021
(51) Int. Cl.: G08G 1/0968, G08G 1/14, H04N 7/18, G08G 1/0967

(54) **METHOD FOR CONTROLLING VEHICLE, SCENE-SIDE SYSTEM, VEHICLE-ENTERPRISE SYSTEM, AND TERMINAL DEVICE**

(71) Applicant: Huawei Technologies Co., Ltd., Shenzhen, Guangdong 518129 (CN)
(72) Inventor: YUAN, Fang, Shenzhen, Guangdong 518129 (CN)
(74) Representative: Gill Jennings & Every LLP
(86) International application number: PCT/CN2021/121694
(87) International publication number: WO 2023/050144

(57) **Abstract**

A vehicle control method, a field side system, an automotive enterprise system, and a terminal device are provided, which can improve reliability and robustness of remotely controlling a vehicle. The method includes: When communication between an automotive enterprise system and a vehicle is normal, the automotive enterprise system controls the vehicle to execute a vehicle control command; and when the communication between the automotive enterprise system and the vehicle is abnormal, the automotive enterprise system forwards the vehicle control command to a field side system, and the field side system controls the vehicle to execute the vehicle control command. The automotive enterprise system includes a management system for remotely controlling the vehicle by an automotive enterprise, and the field side system includes at least one of a management system of a road side unit and a management system of a parking lot.

## Description

### TECHNICAL FIELD

This application relates to the field of intelligent driving, and in particular, to a vehicle control method, a field side system, an automotive enterprise system, and a terminal device.

### BACKGROUND

As intelligent driving develops, more vehicles start to support a remote vehicle control function. Typical remote vehicle control commands include: a ride-hailing command, a parking command, an ignition command, an engine-stopping command, and the like. Currently, remote control solutions include an individual vehicle intelligence solution and a field side system-assisted solution. In the individual vehicle intelligence solution, a vehicle can independently complete a remote vehicle control command, but the solution has a high requirement on vehicle performance. However, in the field side system-assisted solution, a poor communication signal between a vehicle and a field side system affects execution of a remote vehicle control command. For example, performing the remote vehicle control function in a parking lot (especially an underground parking lot) is usually limited by costs and a price-performance ratio. When a network is abnormal or a service function is faulty, a vehicle in a remote control state cannot work normally, resulting in a remote vehicle control failure. Therefore, the industry lacks a mechanism for responding to a network fault in a process of remotely controlling a vehicle, and the mechanism is used to improve reliability and robustness of the vehicle during remote control.

### SUMMARY

This application provides a vehicle control method, a field side system, an automotive enterprise system, and a terminal device, to improve reliability and robustness by using a remote vehicle control method.

According to a first aspect, a vehicle control method is provided. The method includes: When communication between an automotive enterprise system and a vehicle is abnormal, a field side system receives a second vehicle control command sent by the automotive enterprise system, where the second vehicle control command instructs the field side system to control the vehicle to execute a task related to vehicle driving; and the field side system controls, based on the second vehicle control command, the vehicle to execute a task instructed by the second vehicle control command, where the automotive enterprise system includes a management system for remotely controlling the vehicle by an automotive enterprise, and the field side system includes at least one of a management system of a road side unit and a management system of a parking lot.

The automotive enterprise system may be used as a primary system that executes a vehicle control command, and the field side system is used as a secondary system that executes the vehicle control command. The automotive enterprise system and the field side system cooperate with each other to form a primary/secondary architecture system. When communication between the automotive enterprise system and the vehicle is normal, the automotive enterprise system executes the vehicle control command. When communication between the automotive enterprise system and the vehicle is abnormal, the automotive enterprise system may send the vehicle control command to the field side system, and the field side system completes the vehicle control command. This improves reliability and robustness of executing a remote vehicle control command.

With reference to the first aspect, in some possible implementations of the first aspect, the second vehicle control command includes at least one of the following: a ride-hailing request, used to request to perform a ride-hailing operation on the vehicle; a parking request, used to request to perform a parking operation on the vehicle; an ignition command that instructs to perform an ignition operation on the vehicle; an engine-stopping command that instructs to perform an engine-stopping operation on the vehicle; a steering command that instructs to perform a steering operation on the vehicle; a throttle command that instructs to perform an operation of throttling up the engine or throttling down the engine on the vehicle; or a braking command that instructs the vehicle to perform a braking operation.

With reference to the first aspect, in some possible implementations of the first aspect, the second vehicle control command is the ride-hailing request or the parking request, and that the field side system controls, based on the second vehicle control command, the vehicle to execute the task instructed by the second vehicle control command includes: The field side system sends route planning information and idle parking space information to the vehicle based on the second vehicle control command; the field side system receives the ignition command from the automotive enterprise system; and the field side system sends the ignition command to the vehicle.

In a ride-hailing and parking process, when the communication between the automotive enterprise system and the vehicle is abnormal, the field side system may be used as a primary system to send the route planning information and the idle parking space information to the vehicle. However, it is considered that the automotive enterprise system has a higher professional degree of vehicle management and control. Therefore, the ignition command that is highly associated with driving safety of the vehicle is still forwarded by the automotive enterprise system to the vehicle by using the field side system. This solution can ensure that the automotive enterprise system still masters a decision right of the ignition command in a case of a communication failure, to improve security of remotely controlling the vehicle.

With reference to the first aspect, in some possible implementations of the first aspect, that the field side system controls, based on the second vehicle control command, the vehicle to execute the task instructed by the second vehicle control command further includes: The field side system receives vehicle self-check status information from the vehicle, where the vehicle self-check status information indicates a self-check status of the vehicle; and the field side system sends the vehicle self-check status information to the automotive enterprise system. That the field side system receives the ignition command from the automotive enterprise system includes: The field side system receives the ignition command from the automotive enterprise system after sending the vehicle self-check status information.

In a ride-hailing and parking process, when the communication between the automotive enterprise system and the vehicle is abnormal, the automotive enterprise system sends the ignition command to the vehicle through the field side system after receiving the vehicle self-check status information forwarded by the field side system and determining that the vehicle is in a normal state. Because the automotive enterprise system has a higher professional degree of vehicle management and control, the automotive enterprise system, instead of the field side system, determines an occasion for sending the ignition command. This can improve security of remotely controlling the vehicle.

According to a second aspect, a vehicle control method is provided, including: When communication between an automotive enterprise system and a terminal device is abnormal, a field side system receives a third vehicle control command sent by the terminal device, where the third vehicle control command instructs the field side system to control a vehicle to execute a task related to vehicle driving; and the field side system controls, based on the third vehicle control command, the vehicle to execute a task instructed by the third vehicle control command, where the automotive enterprise system includes a management system for remotely controlling the vehicle by an automotive enterprise, the field side system includes at least one of a management system of a road side unit and a management system of a parking lot, and the terminal device corresponds to the vehicle.

The automotive enterprise system may be used as a primary system that executes a vehicle control command, and the field side system may be used as a secondary system that executes the vehicle control command. The automotive enterprise system and the field side system cooperate with each other to form a primary/secondary architecture system. When the communication between the automotive enterprise system and the terminal device is normal, the automotive enterprise system executes the vehicle control command. When the communication between the automotive enterprise system and the terminal device is abnormal, the terminal device may send the vehicle control command to the field side system, and the field side system completes the vehicle control command. This primary/secondary system architecture control manner can improve reliability and robustness of executing a remote vehicle control command.

With reference to the second aspect, in some possible implementations of the second aspect, the third vehicle control command includes at least one of the following: a ride-hailing command that instructs to perform a ride-hailing operation on the vehicle; a parking command that instructs to perform a parking operation on the vehicle; an ignition command that instructs to perform an ignition operation on the vehicle; an engine-stopping command that instructs to perform an engine-stopping operation on the vehicle; a steering command that instructs to perform a steering operation on the vehicle; a throttle command that instructs to perform an operation of throttling up the engine or throttling down the engine on the vehicle; or a braking command that instructs the vehicle to perform a braking operation.

According to a third aspect, a vehicle control method is provided. The method includes: Afield side system sends sensing information to a vehicle when communication between the field side system and the vehicle is normal, where the sensing information indicates reference information required when the vehicle travels; or the field side system sends the sensing information to an automotive enterprise system when the communication between the field side system and the vehicle is abnormal, where the automotive enterprise system includes a management system for remotely controlling the vehicle by an automotive enterprise, and the field side system includes at least one of a management system of a road side unit and a management system of a parking lot.

The field side system may be used as a primary system for delivering the sensing information, and the automotive enterprise system is used as a secondary system for delivering the sensing information. The field side system and the automotive enterprise system cooperate with each other to form a primary/secondary architecture system. When the communication between the field side system and the vehicle is normal, the field side system delivers the sensing information. When the communication between the field system and the vehicle is abnormal, the field system may send the sensing information to the automotive enterprise system, and the automotive enterprise system delivers the sensing information. Because the sensing information is usually collected by the field side system, in this primary/secondary architecture, a speed and efficiency of sending the sensing information can be improved when the communication is normal, and timely delivery of the sensing information is ensured when the communication is abnormal, to improve reliability and robustness of remote vehicle control.

With reference to the third aspect, in some possible implementations of the third aspect, the sensing information includes at least one of the following: idle parking space information that indicates a parking space that is not occupied by the vehicle in a parking lot; route planning information that indicates a driving route of the vehicle from a current location to a destination; real-time vehicle positioning information that indicates a real-time location of the vehicle in a driving process; or obstacle sensing and location information that indicates a location of an obstacle in a driving process.

With reference to the third aspect, in some possible implementations of the third aspect, the method further includes: The field side system determines whether the communication between the field side system and the vehicle is normal.

With reference to the third aspect, in some possible implementations of the third aspect, that the field side system determines whether the communication between the field side system and the vehicle is normal includes: The field side system sends a query instruction to the vehicle; and when the field side system receives a return instruction from the vehicle within preset time, the field side system determines that a function of the communication between the field side system and the vehicle is normal, where the return instruction is used to respond to the query instruction; or when the field side system does not receive the return instruction from the vehicle within preset time, the field side system determines that the function of the communication between the field side system and the vehicle is abnormal.

With reference to the third aspect, in some possible implementations of the third aspect, that the field side system determines whether the communication between the field side system and the vehicle is normal includes: The field side system continuously sends N query instructions to the vehicle, where N is a preset integer greater than or equal to 2; and when the field side system has received, from the vehicle, a return instruction corresponding to at least one of the N query instructions, the field side system determines that a function of the communication between the field side system and the vehicle is normal, where the return instruction is used to respond to the query instruction; or when the field side system does not receive, from the vehicle, return instructions corresponding to the N query instructions, the field side system determines that the function of the communication between the field side system and the vehicle is abnormal.

With reference to the third aspect, in some possible implementations of the third aspect, that the field side system determines whether the communication between the field side system and the vehicle is normal includes: The field side system receives second indication information from the automotive enterprise system, where the second indication information indicates that the vehicle does not receive the sensing information sent by the field side system based on a preset periodicity; and the field side system determines, based on the second indication information, that the communication between the field side system and the vehicle is abnormal.

According to a fourth aspect, a vehicle control method is provided, including: An automotive enterprise system receives a first vehicle control command from a terminal device, where the first vehicle control command instructs the automotive enterprise system to control a vehicle to execute a task related to vehicle driving, and the terminal device corresponds to the vehicle; when communication between the automotive enterprise system and the vehicle is normal, the automotive enterprise system controls, based on the first vehicle control command, the vehicle to execute a task instructed by the first vehicle control command; and when the communication between the automotive enterprise system and the vehicle is abnormal, the automotive enterprise system sends a second vehicle control command to a field side system based on the first vehicle control command, where the second vehicle control command instructs the field side system to control the vehicle to execute the task related to vehicle driving. The automotive enterprise system includes a management system for remotely controlling the vehicle by an automotive enterprise, and the field side system includes at least one of a management system of a road side unit and a management system of a parking lot.

The automotive enterprise system may be used as a primary system that executes a vehicle control command, and the field side system is used as a secondary system that executes the vehicle control command. The automotive enterprise system and the field side system cooperate with each other to form a primary/secondary architecture system. When the communication between the automotive enterprise system and the vehicle is normal, the automotive enterprise system executes the vehicle control command. When the communication between the automotive enterprise system and the vehicle is abnormal, the automotive enterprise system may send the vehicle control command to the field side system, and the field side system completes the vehicle control command. This improves reliability and robustness of executing a remote vehicle control command.

With reference to the fourth aspect, in some possible implementations of the fourth aspect, the first vehicle control command includes at least one of the following: a ride-hailing command that instructs to perform a ride-hailing operation on the vehicle; a parking command that instructs to perform a parking operation on the vehicle; an ignition command that instructs to perform an ignition operation on the vehicle; an engine-stopping command that instructs to perform an engine-stopping operation on the vehicle; a steering command that instructs to perform a steering operation on the vehicle; a throttle command that instructs to perform an operation of throttling up the engine or throttling down the engine on the vehicle; or a braking command that instructs the vehicle to perform a braking operation.

With reference to the fourth aspect, in some possible implementations of the fourth aspect, the second vehicle control command includes at least one of the following: a ride-hailing request, used to request to perform a ride-hailing operation on the vehicle; a parking request, used to request to perform a parking operation on the vehicle; an ignition command that instructs to perform an ignition operation on the vehicle; an engine-stopping command that instructs to perform an engine-stopping operation on the vehicle; a steering command that instructs to perform a steering operation on the vehicle; a throttle command that instructs to perform an operation of throttling up the engine or throttling down the engine on the vehicle; or a braking command that instructs the vehicle to perform a braking operation.

With reference to the fourth aspect, in some possible implementations of the fourth aspect, the first vehicle control command is the ride-hailing command or the parking command, and when the communication between the automotive enterprise system and the vehicle is abnormal, after the automotive enterprise system sends the second vehicle control command to the field side system based on the first vehicle control command, the method further includes: The automotive enterprise system receives vehicle self-check status information from the field side system, where the vehicle self-check status information indicates a self-check status of the vehicle; and the automotive enterprise system sends the ignition command to the field side system after receiving the vehicle self-check status information.

In a ride-hailing and parking process, when the communication between the automotive enterprise system and the vehicle is abnormal, the automotive enterprise system sends the ignition command to the vehicle through the field side system after receiving the vehicle self-check status information forwarded by the field side system and determining that the vehicle is in a normal state. Because the automotive enterprise system has a higher professional degree of vehicle management and control, the automotive enterprise system, instead of the field side system, determines an occasion for sending the ignition command. This can improve security of remotely controlling the vehicle.

With reference to the fourth aspect, in some possible implementations of the fourth aspect, the method further includes: The automotive enterprise system determines whether the communication between the automotive enterprise system and the vehicle is normal.

The automotive enterprise system determines whether the communication between the automotive enterprise system and the vehicle is normal, to determine whether the field side system is used as a primary system that executes the vehicle control command. This improves reliability and security of remote vehicle control.

With reference to the fourth aspect, in some possible implementations of the fourth aspect, that the automotive enterprise system determines whether the communication between the automotive enterprise system and the vehicle is normal includes: The automotive enterprise system sends a query instruction to the vehicle; and when the automotive enterprise system receives a return instruction from the vehicle within preset time, the automotive enterprise system determines that a function of the communication between the automotive enterprise system and the vehicle is normal, where the return instruction is used to respond to the query instruction; or when the automotive enterprise system does not receive the return instruction from the vehicle within preset time, the automotive enterprise system determines that the function of the communication between the automotive enterprise system and the vehicle is abnormal.

With reference to the fourth aspect, in some possible implementations of the fourth aspect, that the automotive enterprise system determines whether the communication between the automotive enterprise system and the vehicle is normal includes: The automotive enterprise system continuously sends N query instructions to the vehicle, where N is a preset integer greater than or equal to 2; and when the automotive enterprise system has received, from the vehicle, a return instruction corresponding to at least one of the N query instructions, the automotive enterprise system determines that a function of the communication between the automotive enterprise system and the vehicle is normal, where the return instruction is used to respond to the query instruction; or when the automotive enterprise system does not receive, from the vehicle, return instructions corresponding to the N query instructions, the automotive enterprise system determines that the function of the communication between the automotive enterprise system and the vehicle is abnormal.

According to a fifth aspect, a vehicle control method is provided, including: When communication between a field side system and a vehicle is abnormal, an automotive enterprise system receives sensing information from the field side system, where the sensing information indicates reference information required when the vehicle travels; and the automotive enterprise system sends the sensing information to the vehicle. The automotive enterprise system includes a management system for remotely controlling the vehicle by an automotive enterprise, and the field side system includes at least one of a management system of a road side unit and a management system of a parking lot.

The field side system may be used as a primary system for delivering the sensing information, and the automotive enterprise system is used as a secondary system for delivering the sensing information. The field side system and the automotive enterprise system cooperate with each other to form a primary/secondary architecture system. When the communication between the field side system and the vehicle is normal, the field side system delivers the sensing information. When the communication between the field system and the vehicle is abnormal, the field system may send the sensing information to the automotive enterprise system, and the automotive enterprise system delivers the sensing information. Because the sensing information is usually collected by the field side system, in this primary/secondary architecture, a speed and efficiency of sending the sensing information can be improved when the communication is normal, and timely delivery of the sensing information is ensured when the communication is abnormal, to improve reliability and robustness of performing remote vehicle control.

With reference to the fifth aspect, in some possible implementations of the fifth aspect, the sensing information includes at least one of the following: idle parking space information that indicates a parking space that is not occupied by the vehicle in a parking lot; route planning information that indicates a driving route of the vehicle from a current location to a destination; real-time vehicle positioning information that indicates a real-time location of the vehicle in a driving process; or obstacle sensing and location information that indicates a location of an obstacle in a driving process.

With reference to the fifth aspect, in some possible implementations of the fifth aspect, the method further includes: The automotive enterprise system receives first indication information from the vehicle, where the first indication information indicates that the vehicle does not receive the sensing information sent by the field side system based on a preset periodicity; and the automotive enterprise system sends second indication information to the field side system based on the first indication information, where the second indication information indicates that the vehicle does not receive the sensing information sent by the field side system based on a preset periodicity.

According to a sixth aspect, a vehicle control method is provided, including: When communication between an automotive enterprise system and a terminal device is normal, the terminal device sends a first vehicle control command to the automotive enterprise system, where the first vehicle control command instructs the automotive enterprise system to control a vehicle to execute a task related to vehicle driving; and when the communication between the automotive enterprise system and the terminal device is abnormal, the terminal device sends a third vehicle control command to a field side system, where the third vehicle control command instructs the field side system to control the vehicle to execute a task related to vehicle driving. The automotive enterprise system includes a management system for remotely controlling the vehicle by an automotive enterprise, the field side system includes at least one of a management system of a road side unit and a management system of a parking lot, and the terminal device corresponds to the vehicle.

The automotive enterprise system may be used as a primary system that executes a vehicle control command, and the field side system is used as a secondary system that executes the vehicle control command. The automotive enterprise system and the field side system cooperate with each other to form a primary/secondary architecture system. When the communication between the automotive enterprise system and the terminal device is normal, the automotive enterprise system executes the vehicle control command. When the communication between the automotive enterprise system and the terminal device is abnormal, the terminal device may send the vehicle control command to the field side system, and the field side system completes the vehicle control command. This improves reliability and robustness of executing a remote vehicle control command.

With reference to the sixth aspect, in some possible implementations of the sixth aspect, the third vehicle control command includes at least one of the following: a ride-hailing command that instructs to perform a ride-hailing operation on the vehicle; a parking command that instructs to perform a parking operation on the vehicle; an ignition command that instructs to perform an ignition operation on the vehicle; an engine-stopping command that instructs to perform an engine-stopping operation on the vehicle; a steering command that instructs to perform a steering operation on the vehicle; a throttle command that instructs to perform an operation of throttling up the engine or throttling down the engine on the vehicle; or a braking command that instructs the vehicle to perform a braking operation.

With reference to the sixth aspect, in some possible implementations of the sixth aspect, the method further includes: The terminal device determines whether the communication between the automotive enterprise system and the terminal device is normal.

With reference to the sixth aspect, in some possible implementations of the sixth aspect, that the terminal device determines whether the communication between the automotive enterprise system and the terminal device is normal includes: The terminal device sends a query instruction to the automotive enterprise system; and when the terminal device determines that a return instruction is received from the automotive enterprise system within preset time, the terminal device determines that a function of the communication between the terminal device and the automotive enterprise system is normal, where the return instruction is used to respond to the first vehicle control command; or when the terminal device determines that no return instruction is received from the automotive enterprise system within preset time, the terminal device determines that the function of the communication between the terminal device and the automotive enterprise system is abnormal.

With reference to the sixth aspect, in some possible implementations of the sixth aspect, that the terminal device determines whether communication between the terminal device and the vehicle is normal includes: The terminal device continuously sends N query instructions to the automotive enterprise system, where N is a preset integer greater than or equal to 2; and when the terminal device determines that a return instruction corresponding to at least one of the N query instructions has been received from the automotive enterprise system, the terminal device determines that a function of the communication between the terminal device and the automotive enterprise system is normal, where the return instruction is used to respond to the query instruction; or when the terminal device determines that no return instructions corresponding to the N query instructions are received from the automotive enterprise system, the terminal device determines that the function of the communication between the terminal device and the automotive enterprise system is abnormal.

According to a seventh aspect, a field side system is provided. The field side system includes a module configured to perform the method in the first aspect, the second aspect, the third aspect, any possible implementation of the first aspect, any possible implementation of the second aspect, or any possible implementation of the third aspect.

According to an eighth aspect, an automotive enterprise system is provided. The automotive enterprise system includes a module configured to perform the method in the fourth aspect, the fifth aspect, any possible implementation of the fourth aspect, or any possible implementation of the fifth aspect.

According to an eighth aspect, a terminal device is provided. The terminal device includes a module configured to perform the method in the sixth aspect or any possible implementation of the sixth aspect.

According to a ninth aspect, a field side system is provided. The field side system includes a communication interface and a processor. The processor is configured to invoke a computer program from a memory. When the computer program is executed, the processor is configured to perform the method in the first aspect, the second aspect, the third aspect, any possible implementation of the first aspect, any possible implementation of the second aspect, or any possible implementation of the third aspect.

According to a tenth aspect, an automotive enterprise system is provided. The automotive enterprise system includes a communication interface and a processor. The processor is configured to invoke a computer program from a memory. When the computer program is executed, the processor is configured to perform the method in the fourth aspect, the fifth aspect, any possible implementation of the fourth aspect, or any possible implementation of the fifth aspect.

According to an eleventh aspect, a terminal device is provided. The terminal device includes a communication interface and a processor. The processor is configured to invoke a computer program from a memory. When the computer program is executed, the processor is configured to perform a module of the method in the sixth aspect or any possible implementation of the sixth aspect.

According to a twelfth aspect, a computer-readable storage medium is provided. The computer-readable storage medium is configured to store a computer program. The computer program includes instructions used to perform the method in any one of the first aspect to the sixth aspect or any possible implementation of any one of the first aspect to the sixth aspect.

According to a thirteenth aspect, a computer program product is provided, including a computer program. The computer program includes instructions used to perform the method in any one of the first aspect to the sixth aspect or any possible implementation of any one of the first aspect to the sixth aspect.

### BRIEF DESCRIPTION OF DRAWINGS

FIG. 1 is a schematic diagram of an applicable application scenario according to an embodiment of this application;
FIG. 2 is a schematic flowchart of a vehicle control method according to an embodiment of this application;
FIG. 3 is a schematic diagram of a vehicle control method according to another embodiment of this application;
FIG. 4 is a schematic diagram of a vehicle control method according to still another embodiment of this application;
FIG. 5 is a schematic diagram of a scenario of executing a vehicle control command according to an embodiment of this application;
FIG. 6 is a schematic flowchart of an automatic ride-hailing method according to an embodiment of this application;
FIG. 7 is a schematic flowchart of an automatic ride-hailing method during normal communication according to an embodiment of this application;
FIG. 8 is a schematic flowchart of a ride-hailing method during abnormal communication according to an embodiment of this application;
FIG. 9 is a schematic diagram of a scenario of an automatic parking method according to an embodiment of this application;
FIG. 10 is a schematic flowchart of a parking method in a normal procedure according to an embodiment of this application;
FIG. 11 is a schematic flowchart of an automatic parking method in an abnormal procedure according to an embodiment of this application;
FIG. 12 is a schematic diagram of display interfaces of a terminal device during primary/secondary channel switching according to an embodiment of this application;
FIG. 13 is a schematic flowchart of a method for switching a primary/secondary channel on a terminal device side according to an embodiment of this application;
FIG. 14 is a flowchart of a method for delivering sensing information according to an embodiment of this application;
FIG. 15 is a schematic flowchart of delivering route planning information and idle parking space information according to an embodiment of this application;
FIG. 16 is a schematic flowchart of a method for delivering real-time vehicle positioning information according to an embodiment of this application;
FIG. 17 is a schematic diagram of a structure of an apparatus 1700 for controlling a vehicle according to an embodiment of this application; and
FIG. 18 is a schematic diagram of a structure of an apparatus 1800 for controlling a vehicle according to another embodiment of this application.

### DESCRIPTION OF EMBODIMENTS

The following describes technical solutions of this application with reference to accompanying drawings.

Several terms in embodiments of this application are first described.

Automatic valet parking (automated valet parking, AVP) uses sensors in a vehicle and surrounding environment to sense an object around the vehicle, measures a relative distance, speed, and angle between the vehicle and the surrounding object, and then controls the vehicle to implement automatic parking in and out and some driving functions through a vehicle-mounted computing system or a cloud computing system.

In an existing automatic vehicle control solution, the following problems exist: A network signal of a parking lot is not stable, signal quality of all areas cannot be ensured, and even a network fault may occur. However, in a process of executing a remote vehicle control command, a vehicle needs to continuously communicate with the outside, for example, an automotive enterprise system or a field side system. Therefore, when a network fault occurs, because the vehicle cannot receive all or some instructions, execution of the control command fails, is suspended, or is incorrect.

To resolve the foregoing problems, embodiments of this application provide a design architecture of a primary/secondary channel used for automatic vehicle control and a vehicle control method based on the architecture, to improve robustness of an automatic vehicle control function. In the existing solution, an architecture used for automatic vehicle control usually uses a unique central processing mechanism, and lacks a backup channel. However, in embodiments of this application, an automotive enterprise system and a field side system are jointly used as core function systems, distributed collaboration is performed between each other, and the automotive enterprise system and the field side system are both primary and secondary backup channels for each other. The following describes in detail the solutions in embodiments of this application with reference to the accompanying drawings.

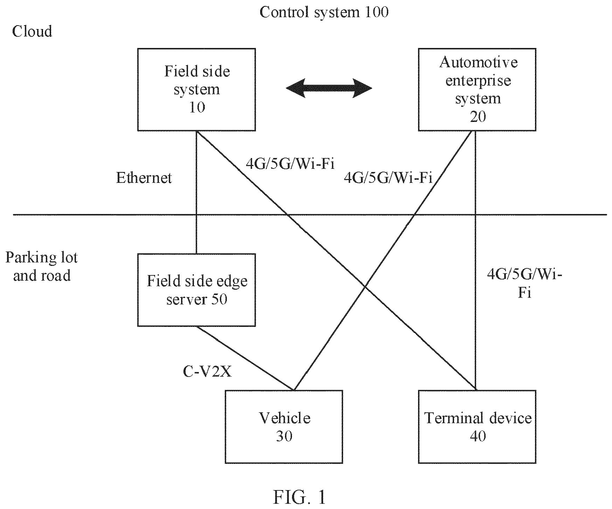

FIG. 1 is a schematic diagram of an applicable application scenario according to an embodiment of this application. As shown in FIG. 1, a control system 100 for implementing vehicle self-driving includes a field side system 10, a field side edge server 50, an automotive enterprise system 20, a vehicle 30, and a terminal device 40.

The field side system 10 may also be referred to as a field side cloud system, and the field side system 10 may include at least one of a management system of a parking lot and a management system of a road side unit (road side unit, RSU). Optionally, when the field side system 10 includes the two management systems, the field side system 10 may be referred to as a management system of the parking lot and the road side unit. The field side system 10 may collect environment information of the parking lot and a road side, route information, idle parking space information, obstacle identification information, and the like by using various apparatuses disposed in the parking lot and the road side, and perform comprehensive analysis and send an instruction based on the collected information.

Functions of the field side system 10 include but are not limited to the following: management of equipment at an edge of the parking lot, information push, upgrade and maintenance, interconnection with a third-party system like a parking lot, parking space allocation and identification, route planning and delivery, and serving as a backup channel to interconnect with the terminal device 40 like a mobile phone.

The field side system 10 may be any third-party system, provided that the third-party system can support a primary/secondary channel system architecture in embodiments of this application, and implement distributed collaboration with the automotive enterprise system 20.

The field side system 10 may include one or more servers, and the servers implement the functions of the field side system 10. It should be understood that in practice, the field side system 10 may implement more or fewer functions. For example, in some examples, a function related to parking lot management (or a management system of the parking lot) may be independent and implemented by another party.

The automotive enterprise system 20 may also be referred to as an automotive enterprise cloud system. The automotive enterprise system 20 may communicate with the terminal device 40, the vehicle 30, and the field side system 10. A vehicle owner may communicate with the automotive enterprise system through the terminal device, to indicate the automotive enterprise system to exchange information with the vehicle or implement some control functions. For example, after receiving a remote vehicle control command sent by the vehicle owner through the terminal device 40, the automotive enterprise system 20 may deliver a corresponding command to the vehicle 30. Functions of the automotive enterprise system 20 include but are not limited to the following: delivery of a ride-hailing command, delivery of a parking command, delivery of an ignition command, delivery of an engine-stopping command, delivery of a steering command, delivery of a throttle command, delivery of a braking command, vehicle status monitoring, and interconnection with the terminal device 40 like a mobile phone.

The field side edge server 50 may also be referred to as an edge server 50, and may be disposed near a parking lot or a road. The field side edge server 50 may communicate with the field side system 10 and the vehicle 30. In addition, the field side edge server 50 may communicate with a monitoring apparatus like a smart camera disposed near the parking lot or the road, to obtain corresponding environment monitoring information. Functions of the field side edge server 50 include but are not limited to the following: delivery of obstacle identification and related information; vehicle driving status monitoring; delivery of real-time vehicle positioning information; and reporting device running status to the field side system 10.

In an example, a manner of communication between the field side system 10 and the field side edge server 50 is Ethernet (ethernet) communication. The field side edge server 50 may communicate with the vehicle 30 through a cellular vehicle-to-everything (Cellular Vehicle-to-Everything, C-V2X) technology. For example, the field side edge server 50 may communicate with the vehicle 30 through a road side unit (road side unit, RSU).

The terminal device 40 may include a mobile phone, a tablet computer, a smart wristwatch, or another type of intelligent terminal device 40, and may communicate with the automotive enterprise system 20 or the field side system 10 through a mobile phone application. The following communication technologies may be used between the terminal device 40 and the automotive enterprise system 20 or the field side system 10: a fourth generation mobile communication technology (4th generation mobile communication technology, 4G), a fifth generation mobile communication technology (5th generation mobile communication technology, 5G), or Wi-Fi.

In this embodiment of this application, functions of the terminal device 40 include but are not limited to the following: sending a ride-hailing command; sending a parking command; implementing AVP service interaction and query, for example, delivering an automatic vehicle washing command, delivering a charging service command, querying a driving track and a driving status of the vehicle 30, and pushing a service notification by a system; and determining primary/secondary channel switching. For a definition of a primary/secondary channel, refer to the following specific description. Optionally, the terminal device 40 may provide an interface of a mobile phone application, so that a user implements switching and interaction between primary/secondary channels on an interface of the mobile phone. For example, when the automotive enterprise system 20 is faulty, the interface of the mobile phone may present a prompt interface, so that the user selects whether to switch to a channel operation interface of the field side system 10.

The vehicle 30 may be configured to: receive an instruction sent by the automotive enterprise system 20 or the field side system 10, or report running status information of the vehicle 30. For example, the vehicle 30 may communicate with the automotive enterprise system 20 through 4G, 5G, or Wi-Fi. The vehicle 30 communicates with the field side system 10 through the field side edge server 50. In some examples, a high-security and low-latency vehicle 30 network dedicated communication channel, for example, C-V2X communication, may be used between the vehicle 30 and the field side edge server 50, or a 4G or 5G communication manner may be used between the vehicle 30 and the field side edge server 50.

In embodiments of this application, the vehicle control method may be completed by the field side system, the automotive enterprise system, the vehicle, and the terminal device through cooperation. A function performed by the vehicle is controlled to be executing a vehicle control command or delivering sensing information, so that the field side system and the automotive enterprise system can be respectively and flexibly set as a primary system or a secondary system. The primary system may be understood as a primary system that executes the vehicle control method. When a function of communication is normal, the vehicle control method is completed by the primary system. The secondary system may be understood as a backup system that executes the vehicle control method. When a function of communication between the primary system and the vehicle is abnormal, the vehicle control method is completed by the secondary system. A communication link corresponding to the primary system may be referred to as a primary channel, and a communication link corresponding to the secondary system may be referred to as a secondary channel.

In embodiments of this application, when the vehicle control method is to execute a vehicle control command, the automotive enterprise system may be set as a primary system, and the field side system may be set as a secondary system. The control command may be a command that controls the vehicle to perform a task related to vehicle driving, or a command that can remotely operate the vehicle. The vehicle control command includes but is not limited to: an ignition command, an engine-stopping command, a ride-hailing command, a parking command, a steering command, a throttle command, and a braking command. Considering that the vehicle control commands are highly associated with driving safety of the vehicle, the vehicle control commands are preferentially executed by an automotive enterprise system with a higher professional degree, so that driving safety performance of the vehicle can be improved. If the automotive enterprise system or a communication link between the automotive enterprise system and the vehicle is faulty, the field-side system is switched to execute the vehicle control commands.

For reference, the foregoing vehicle control commands are defined as follows.

The ride-hailing command: This command is used to notify a system to start the vehicle to travel from a parking space to a shuttle area that a user is located.

The parking command: This command instructs a system to start the vehicle to travel from a shuttle area that a user gets off to an idle parking space for parking.

The ignition command is a command for the automotive enterprise system to remotely control the vehicle to start the engine.

The engine-stopping command is a command for the automotive enterprise system remotely to control the vehicle to stop the engine.

The steering command instructs to perform a steering operation on the vehicle.

The throttle command instructs to perform an operation of throttling up the engine or throttling down the engine on the vehicle.

The braking command instructs the vehicle to perform a braking operation.

In embodiments of this application, when the vehicle control method is to deliver sensing information to the vehicle, the field side system may be set as a primary system, and the automotive enterprise system may be set as a secondary system. The sensing information indicates reference information required when the vehicle travels. The sensing information includes but is not limited to: idle parking space status information, route planning information, real-time vehicle positioning information, and obstacle sensing and location information. Because the field side system may send the sensing information to the vehicle by using a field side edge server disposed in a parking lot, a communication speed is faster, and security association between the sensing information and the vehicle is low, sending the sensing information may be preferentially performed by the field side system. If the field side system or a communication link between the field side system and the vehicle is faulty, the automotive enterprise system is switched to send the sensing information.

For example, the sensing information may include reference information that is related to vehicle driving and that is collected and monitored by the field side system.

When the primary system or a communication link between the vehicle and the primary system is faulty, a switching mechanism may be started, and the secondary system executes a vehicle control command or delivers the sensing information.

For reference, the foregoing sensing information is defined as follows.

The idle parking space information indicates a parking space that is not occupied by the vehicle in a parking lot.

The route planning information indicates a driving route of the vehicle from a current location to a destination. For example, the destination may be an idle parking space.

The real-time vehicle positioning information indicates a real-time location of the vehicle in a driving process. For example, in a driving process of the vehicle, actual location information of the vehicle may be sensed and calculated in real time by the field side system.

The obstacle sensing and location information indicates a location of an obstacle in a driving process of the vehicle. For example, in a driving process of the vehicle, actual location information of an obstacle on a road in front of the vehicle may be sensed and calculated in real time by the field side system.

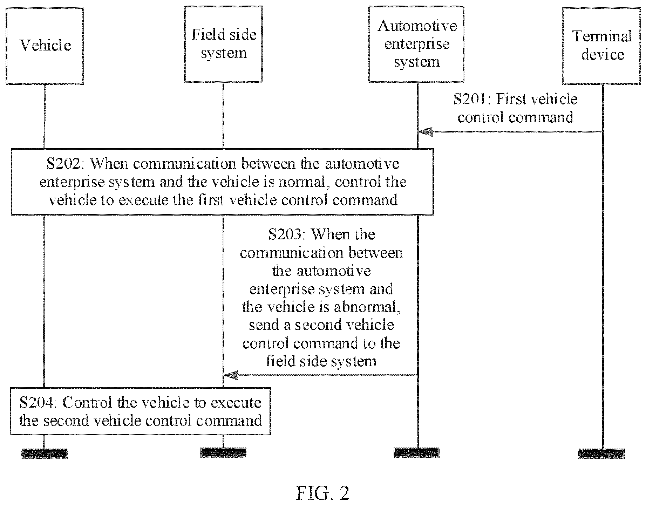

FIG. 2 is a schematic flowchart of a vehicle control method according to an embodiment of this application. The method in FIG. 2 describes a processing method used when the vehicle control method is to execute a vehicle control command and communication between an automotive enterprise system and a vehicle is abnormal. As shown in FIG. 2, the method includes the following steps.

S201: A terminal device sends a first vehicle control command to the automotive enterprise system, and correspondingly, the automotive enterprise system receives the first vehicle control command from the terminal device, where the first vehicle control command instructs the automotive enterprise system to control the vehicle to execute a task related to vehicle driving, and the terminal device corresponds to the vehicle.

Optionally, the first vehicle control command includes at least one of the following: a ride-hailing command, a parking command, an ignition command, an engine-stopping command, a steering command, a throttle command, or a braking command.

Optionally, the ride-hailing command sent by the terminal device may also be referred to as a one-tap ride-hailing command, and the parking command sent by the terminal device may also be referred to as a one-tap parking command.

In a specific example, a user may tap a link corresponding to the first vehicle control command on the terminal device, to send the first vehicle control command.

S202: When communication between the automotive enterprise system and the vehicle is normal, the automotive enterprise system controls, based on the first vehicle control command, the vehicle to execute a task instructed by the first vehicle control command.

The automotive enterprise system is a primary system for executing the vehicle control command. Therefore, when the communication between the automotive enterprise system and the vehicle is normal, the vehicle control command is executed by the automotive enterprise system.

S203: When the communication between the automotive enterprise system and the vehicle is abnormal, the automotive enterprise system sends a second vehicle control command to a field side system, and correspondingly, the field side system receives the second vehicle control command sent by the automotive enterprise system, where the second vehicle control command instructs the field side system to control the vehicle to perform the task related to vehicle driving.

When the communication between the automotive enterprise system and the vehicle is abnormal, the automotive enterprise system may start a switching mechanism, and send the second vehicle control command to the field side system, so that the field side system executes the second vehicle control command.

Optionally, the second vehicle control command is generated based on the first vehicle control command, and content of the second vehicle control command may be completely the same as that of the first vehicle control command, or may be properly adjusted for receiving by the field side system.

For example, if the first vehicle control command is a ride-hailing command or a parking command, the second vehicle control command may be a ride-hailing request or a parking request. Because a process of executing the ride-hailing command and the parking command is complex, for example, route planning information further needs to be delivered to the vehicle and vehicle self-check status information needs to be obtained, a plurality of times of communication and cooperation need to be performed between the field side system and the automotive enterprise system, to complete the ride-hailing command and the parking command. Therefore, the second vehicle control command is the ride-hailing request or the parking request. After feedback of the vehicle is obtained, remaining procedures of the ride-hailing command and the parking command continue to be performed.

Optionally, the second vehicle control command includes but is not limited to at least one of the following: a ride-hailing request, a parking request, an ignition command, an engine-stopping command, a steering command, a throttle command, and a braking command.

Optionally, abnormal communication between the automotive enterprise system and the vehicle may include a case in which the automotive enterprise system is faulty.

S204: The field side system controls, based on the second vehicle control command, the vehicle to execute a task instructed by the second vehicle control command, where the automotive enterprise system includes a management system for remotely controlling the vehicle by an automotive enterprise, and the field side system includes at least one of a management system of a road side unit and a management system of a parking lot.

After receiving the second vehicle control command, the field side system may perform remote control on the vehicle based on the second vehicle control command. Optionally, the field side system may independently implement remote control on the vehicle, or may implement remote control on the vehicle by interacting and communicating with the automotive enterprise system.

For example, the field side system may be used as a transfer station to forward, between the automotive enterprise system and the vehicle, a key vehicle control command. In other words, the field side system may forward, to the automotive enterprise system, the second vehicle control command sent by the terminal device. After receiving the second vehicle control command, the automotive enterprise system may send, to the vehicle through the field side system, control signaling or information related to execution of the second vehicle control command.

For example, if the second vehicle control command is a ride-hailing request or a parking request, that the field side system controls, based on the second vehicle control command, the vehicle to execute the task instructed by the second vehicle control command includes: The field side system sends route planning information and idle parking space information to the vehicle after receiving the second vehicle control command from the automotive enterprise system; the field side system receives an ignition command from the automotive enterprise system after sending the route planning information and the idle parking space information; and the field side system sends the ignition command to the vehicle. For example, the vehicle may send a response message to the automotive enterprise system through the field side system, and the response message indicates that the route planning information and the idle parking space information have been received. After receiving the response message, the automotive enterprise system may send the ignition command to the vehicle through the field side system.

Further, that the field side system controls, based on the second vehicle control command, the vehicle to execute the task instructed by the second vehicle control command further includes: The field side system receives vehicle self-check status information from the vehicle, where the vehicle self-check status information indicates a self-check status of the vehicle; and the field side system sends the vehicle self-check status information to the automotive enterprise system. That the field side system receives the ignition command from the automotive enterprise system includes: The field-side system receives the ignition command from the automotive enterprise system after sending the vehicle self-check status information. For example, after receiving the vehicle self-check status information, the automotive enterprise system may send the ignition command to the vehicle through the field side system.

In this embodiment of this application, the automotive enterprise system may be used as a primary system that executes a vehicle control command, and the field side system is used as a secondary system that executes the vehicle control command. The automotive enterprise system and the field side system cooperate with each other to form a primary/secondary architecture system. When the communication between the automotive enterprise system and the vehicle is normal, the automotive enterprise system executes the vehicle control command. When the communication between the automotive enterprise system and the vehicle is abnormal, the automotive enterprise system may send the vehicle control command to the field side system, and the field side system completes the vehicle control command. This improves robustness and security of executing a remote vehicle control command.

Optionally, the method in FIG. 2 further includes: The automotive enterprise system determines whether the communication between the automotive enterprise system and the vehicle is normal.

Optionally, the automotive enterprise system may send a query instruction to the vehicle, and determine, based on whether a corresponding return instruction is received, whether the communication between the automotive enterprise system and the vehicle is normal.

For example, the automotive enterprise system sends a query instruction to the vehicle. When determining that a return instruction is received from the vehicle within preset time, the automotive enterprise system determines that a function of the communication between the automotive enterprise system and the vehicle is normal. The return instruction is used to respond to the query instruction. When determining that no return instruction is received from the vehicle within preset time, the automotive enterprise system determines that the function of the communication between the automotive enterprise system and the vehicle is abnormal.

Optionally, the automotive enterprise system may also preset a quantity of times of sending the query instruction. If no return instruction is received after the query instruction is sent to the vehicle for a plurality of times, it is determined that the function of the communication between the automotive enterprise system and the vehicle is abnormal.

For example, the automotive enterprise system continuously sends N query instructions to the vehicle, where N is a preset value, for example, an integer greater than or equal to 2. When determining that a return instruction corresponding to at least one of the N query instructions has been received from the vehicle, the automotive enterprise system determines that the function of the communication between the automotive enterprise system and the vehicle is normal. The return instruction is used to respond to the query instruction. When determining that no return instructions corresponding to the N query instructions are received from the vehicle, the automotive enterprise system determines that the function of the communication between the automotive enterprise system and the vehicle is abnormal.

For example, the automotive enterprise system may send the query instruction to the vehicle. If no return instruction sent by the vehicle is received within preset time, the query instruction continues to be sent to the vehicle until the return instruction is received, and in this case, it is determined that communication is normal. Alternatively, if the return instruction is not received until a quantity of times of sending the query instruction reaches a preset quantity of times, it is determined that communication is abnormal.

In addition, it should be noted that, in this embodiment of this application, determining whether a function of communication between two devices is abnormal based on a quantity of query times is common determining manner. However, the determining manner is not limited to a method of a quantity of query instruction times, and another determining manner also exists. In this embodiment of this application, the quantity of query times is used as an example.

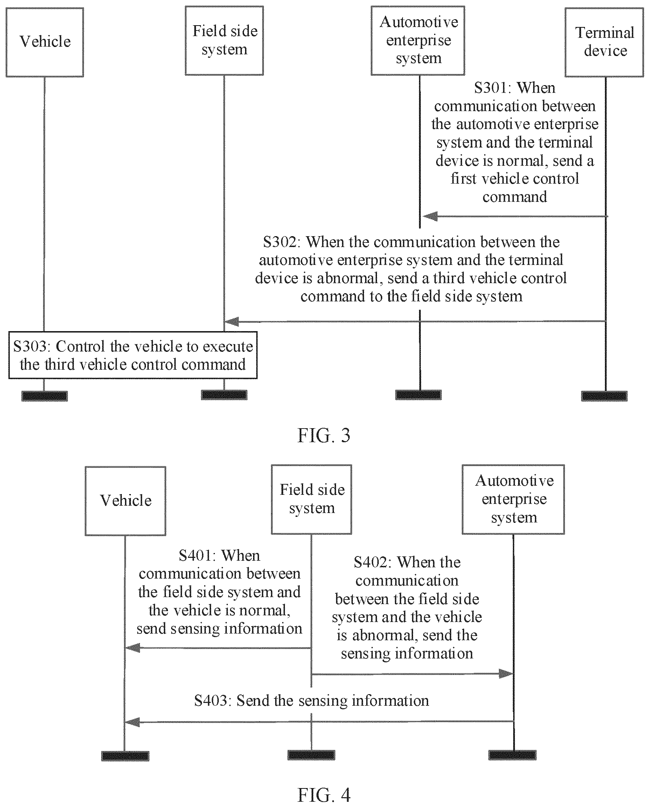

FIG. 3 is a schematic diagram of a vehicle control method according to another embodiment of this application. The method in FIG. 3 describes a method used when a function executed by a vehicle is controlled to be a vehicle control command and communication between an automotive enterprise system and a terminal device is abnormal. As shown in FIG. 3, the method includes the following steps.

S301: When the communication between the automotive enterprise system and the terminal device is normal, the terminal device sends a first vehicle control command to the automotive enterprise system, and correspondingly, the automotive enterprise system receives the first vehicle control command from the terminal device, where the first vehicle control command instructs the automotive enterprise system to control the vehicle to execute a task related to vehicle driving.

For a definition of the first vehicle control command, refer to the foregoing related content. Details are not described herein again.

S302: When the communication between the automotive enterprise system and the terminal device is abnormal, the terminal device sends a third vehicle control command to a field side system, and correspondingly, the field side system receives the third vehicle control command from the terminal device, where the third vehicle control command instructs the field side system to control the vehicle to execute the task related to vehicle driving.

The automotive enterprise system includes a management system for remotely controlling the vehicle by an automotive enterprise, the field side system is a management system of a road side unit and a parking lot, and the terminal device corresponds to the vehicle.

Optionally, content of the third vehicle control command may be the same as that of the first vehicle control command. When the communication between the automotive enterprise system and the terminal device is abnormal, the terminal device may use the field side system as an alternative system, and send the third vehicle control command to the field side system, so that the field side system performs remote control on the vehicle.

For example, the third vehicle control command includes at least one of the following: a ride-hailing command, a parking command, an ignition command, an engine-stopping command, a steering command, a throttle command, and a braking command.

Optionally, abnormal communication between the automotive enterprise system and the terminal device may include a case in which the automotive enterprise system is faulty.

S303: The field side system controls, based on the third vehicle control command, the vehicle to execute a task instructed by the third vehicle control command.

After receiving the third vehicle control command, the field side system may perform remote control on the vehicle based on the third vehicle control command. Optionally, the field side system may independently implement remote control on the vehicle, or may implement remote control on the vehicle by interacting and communicating with the automotive enterprise system.

For example, the field side system may be used as a transfer station to forward, between the automotive enterprise system and the vehicle, a key vehicle control command. In other words, the field side system may forward, to the automotive enterprise system, the third vehicle control command sent by the terminal device. After receiving the third vehicle control command, the automotive enterprise system may send, to the vehicle through the field side system, control signaling related to execution of the third vehicle control command.

For another example, the field side system may forward the third vehicle control command to the automotive enterprise system, and the automotive enterprise system may also detect whether communication between the automotive enterprise system and the vehicle is normal. If the communication between the automotive enterprise system and the vehicle is normal, the automotive enterprise system may directly control the vehicle to execute the third vehicle control command, and the field side system does not need to be used as a transfer device.

It should be noted that, in this embodiment of this application, for ease of differentiation, the vehicle control command sent by the terminal device to the automotive enterprise system may be referred to as the first vehicle control command, the vehicle control command sent by the automotive enterprise system to the field side system may be referred to as the second vehicle control command, and the vehicle control command sent by the terminal device to the field side system may be referred to as the third vehicle control command.

In this embodiment of this application, the automotive enterprise system may be used as a primary system that executes the vehicle control command, and the field side system is used as a secondary system that executes the vehicle control command. The automotive enterprise system and the field side system cooperate with each other to form a primary/secondary architecture system. When the communication between the automotive enterprise system and the terminal device is normal, the automotive enterprise system executes the vehicle control command. When the communication between the automotive enterprise system and the terminal device is abnormal, the terminal device may send the vehicle control command to the field side system, and the field side system completes the vehicle control command. This improves robustness and security of executing a remote vehicle control command.

Optionally, the method in FIG. 3 further includes: The terminal device determines whether the communication between the automotive enterprise system and the terminal device is normal.

Optionally, the terminal device may send a query instruction to the automotive enterprise system, and determine, based on whether the automotive enterprise system replies to the query instruction, whether the communication between the automotive enterprise system and the terminal device is normal.

For example, the terminal device sends a query instruction to the automotive enterprise system. When determining that a return instruction is received from the automotive enterprise system within preset time, the terminal device determines that a function of the communication between the terminal device and the automotive enterprise system is normal. The return instruction is used to respond to the query instruction. When determining that no return instruction is received from the automotive enterprise system within preset time, the terminal device determines that the function of the communication between the terminal device and the automotive enterprise system is abnormal.

Alternatively, the terminal device may preset a quantity of times of sending the query instruction. If no return instruction is received after the query instruction is sent to the automotive enterprise system for a plurality of times, it is determined that the function of the communication between the terminal device and the automotive enterprise system is abnormal.

For example, the terminal device continuously sends N query instructions to the automotive enterprise system, where N is a preset integer greater than or equal to 2. When determining that a return instruction corresponding to at least one of the N query instructions has been received from the automotive enterprise system, the terminal device determines that the function of the communication between the terminal device and the automotive enterprise system is normal. The return instruction is used to respond to the query instruction. When determining that no return instructions corresponding to the N query instructions are received from the automotive enterprise system, the terminal device determines that the function of the communication between the terminal device and the automotive enterprise system is abnormal.

In some examples, the query instruction may be the first vehicle control command. To be specific, after the terminal device sends the first vehicle control command to the automotive enterprise system, if the terminal device does not receive the return instruction from the automotive enterprise system, it may be considered that the function of the communication between the terminal device and the automotive enterprise system is abnormal.

FIG. 4 is a schematic diagram of a vehicle control method according to still another embodiment of this application. The method in FIG. 4 describes a method used when the vehicle control method is to deliver sensing information and communication between a field side system and a vehicle is abnormal. As shown in FIG. 4, the method includes the following steps.

S401: When the communication between the field side system and the vehicle is normal, the field side system sends the sensing information to the vehicle, and correspondingly, the vehicle receives the sensing information from the field side system, where the sensing information indicates reference information required when the vehicle travels.

Optionally, the sensing information includes but is not limited to the following information: idle parking space information, route planning information, real-time vehicle positioning information, and obstacle sensing and location information.

For delivery of the sensing information, the field side system may be used as a primary system, and an automotive enterprise system may be used as a secondary system. Therefore, when the communication between the field side system and the vehicle is normal, the field side system is responsible for sending the sensing information to the vehicle.

S402: When the communication between the field side system and the vehicle is abnormal, the field side system sends the sensing information to the automotive enterprise system, and correspondingly, the automotive enterprise system receives the sensing information from the field side system, so that the automotive enterprise system sends the sensing information to the vehicle.

When the communication between the field side system and the vehicle is abnormal, the field side system may send the sensing information to the automotive enterprise system, and the automotive enterprise system is responsible for sending the sensing information to the vehicle.

Optionally, abnormal communication between the field side system and the vehicle may also include a case in which the field side system is faulty.

S403: The automotive enterprise system sends the sensing information to the vehicle, and correspondingly, the vehicle receives the sensing information from the automotive enterprise system.

In this embodiment of this application, the field side system may be used as a primary system for delivering the sensing information, and the automotive enterprise system is used as a secondary system for delivering the sensing information. The field side system and the automotive enterprise system cooperate with each other to form a primary/secondary architecture system. When the communication between the field side system and the vehicle is normal, the field side system delivers the sensing information. When the communication between the field side system and the vehicle is abnormal, the field side system may send the sensing information to the automotive enterprise system, and the field side system delivers the sensing information. This improves robustness and security of performing remote vehicle control.

Optionally, the field side system may send a query instruction to the vehicle, and determine, based on whether the vehicle replies to the query instruction, whether the communication between the field side system and the vehicle is normal.

For example, the field side system sends a query instruction to the vehicle. When determining that a return instruction is received from the vehicle within preset time, the field side system determines that a function of the communication between the field side system and the vehicle is normal. The return instruction is used to respond to the query instruction. When determining that no return instruction is received from the vehicle within preset time, the field side system determines that the function of the communication between the field side system and the vehicle is abnormal.

Alternatively, the field side system may preset a quantity of times of sending the query instruction. If no return instruction is received after the query instruction is sent to the vehicle for a plurality of times, it is determined that the function of the communication between the field side system and the vehicle is abnormal.

For example, the field side system continuously sends N query instructions to the vehicle, where N is a preset integer greater than or equal to 2. When determining that a return instruction corresponding to at least one of the N query instructions has been received from the vehicle, the field side system determines that the function of the communication between the field side system and the vehicle is normal. The return instruction is used to respond to the query instruction. When determining that no return instructions corresponding to the N query instructions are received from the vehicle, the field side system determines that the function of the communication between the field side system and the vehicle is abnormal.

Optionally, if the sensing information is sent by the field side system to the vehicle based on a preset periodicity, and if the vehicle does not receive the sensing information within preset time, the vehicle may report this case to the automotive enterprise system, and then the automotive enterprise system notifies the field side system, so that the field side system can determine that the function of the communication between the field side system and the vehicle is abnormal.

For example, if the vehicle does not receive the sensing information based on the preset periodicity, the vehicle may send first indication information to the automotive enterprise system. The first indication information indicates that the vehicle does not receive the sensing information sent by the field side system based on the preset periodicity. The automotive enterprise system sends second indication information to the field side system based on the first indication information. The second indication information indicates that the vehicle does not receive the sensing information sent by the field side system based on the preset periodicity. The field side system determines, based on the second indication information, that the communication between the field side system and the vehicle is abnormal.

In this embodiment of this application, a primary/secondary relationship between the automotive enterprise system and the field side system may be flexibly set. In other words, because services executed by the vehicle control method are different, corresponding primary systems and corresponding secondary systems are also different.

In this embodiment of this application, a vehicle control architecture of a primary/secondary channel is provided. The field side system and the automotive enterprise system cooperate with each other, perform distributed collaboration, and provide a dual-channel communication link, so that a key command and information can be backed up and protected. When a network element in the communication link or a communication link is faulty, a channel may be switched to another channel to ensure robustness and security of executing a remote vehicle control command.

Embodiments of this application may be applicable to a plurality of abnormal scenarios in which the vehicle control method is performed. As an example instead of a limitation, embodiments of this application are applicable to the following abnormal scenarios.

### 1. Weak network signals around a vehicle

If the network signals around the vehicle are weak, for example, communication between the vehicle and an automotive enterprise system or a field side system is abnormal, the vehicle may not receive an instruction when a vehicle control command is executed. As a result, the vehicle control command fails to be executed.

### 2. A system fault

The system fault may include a fault of an automotive enterprise system or a fault of a field side system.

### 3. Weak network signals on a parking lot side or a fault

For example, communication signals between a field side edge server and a vehicle in a parking lot are weak, or the field side edge server is faulty.

With reference to specific examples, the following continues to describe a vehicle control method in embodiments of this application.

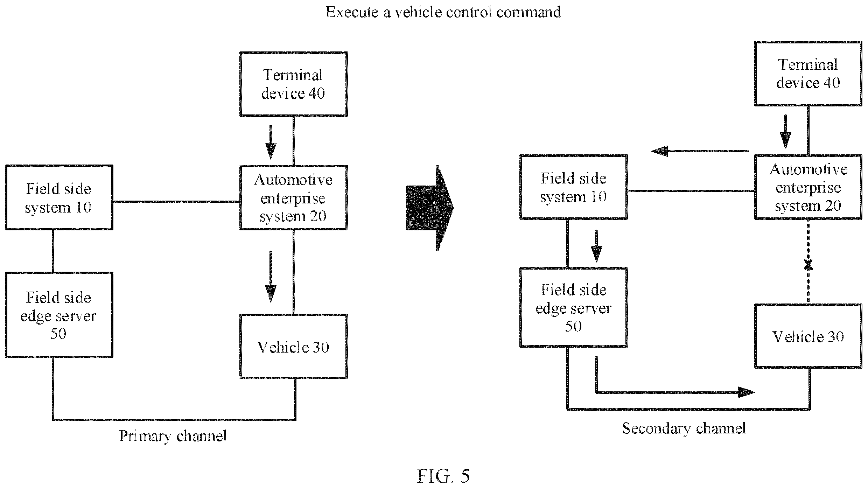

FIG. 5 is a schematic diagram of a scenario of executing a vehicle control command according to an embodiment of this application. As shown in FIG. 5, for the vehicle control command, an automotive enterprise system 20 may be set as a primary system, and a field side system 10 may be set as a secondary system. When a communication signal between the automotive enterprise system 20 and s vehicle 30 is normal, the automotive enterprise system 20 executes the vehicle control command, that is, a communication link between the automotive enterprise system 20 and the vehicle 30 is a primary channel. A communication path of the primary channel is: a terminal device 40->the automotive enterprise system 20->the vehicle 30.

When a communication signal between the automotive enterprise system 20 and the vehicle 30 is abnormal, the field side system 10 executes the vehicle control command. A communication link between the field side system 10 and the vehicle 30 is a secondary channel. A communication path of the secondary channel is: the terminal device 40->the automotive enterprise system 20->the field side system 10->a field side edge server 50->the vehicle 30.

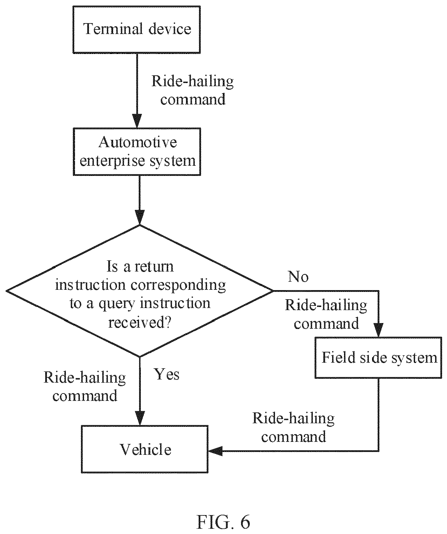

FIG. 6 is a schematic flowchart of an automatic ride-hailing method according to an embodiment of this application. As shown in FIG. 6, when communication on a primary channel is normal, a normal procedure is as follows: A user taps a link of a ride-hailing command on a terminal device, and the terminal device sends the ride-hailing command to an automotive enterprise system. The automotive enterprise system sends a query instruction to a vehicle. If the vehicle replies to the query instruction, communication between the automotive enterprise system and the vehicle is normal, and the ride-hailing command can be executed through the primary channel. Therefore, the automotive enterprise system sends the ride-hailing command to the vehicle. The vehicle automatically determines to enter an ignition state, and the vehicle is started to execute the ride-hailing command.

Still refer to FIG. 6. When the communication on the primary channel is abnormal, an abnormal procedure is as follows: A user taps a link of a ri de-hailing command on a terminal device, and the terminal device sends the ride-hailing command to an automotive enterprise system. The automotive enterprise system sends a query instruction to a vehicle. If the vehicle does not reply to the query instruction, communication between the automotive enterprise system and the vehicle is abnormal. In this case, the primary channel needs to be switched to a secondary channel, to execute the ride-hailing command. Therefore, the automotive enterprise system sends the ride-hailing command to a field side system, and the field side system executes the ride-hailing command.

Optionally, the automotive enterprise system may send a query instruction to the vehicle for a predetermined quantity of times (for example, three times). If no query result replied by the vehicle is received within preset time (for example, three seconds (s)), it can be determined that communication between the automotive enterprise system and the vehicle is abnormal.

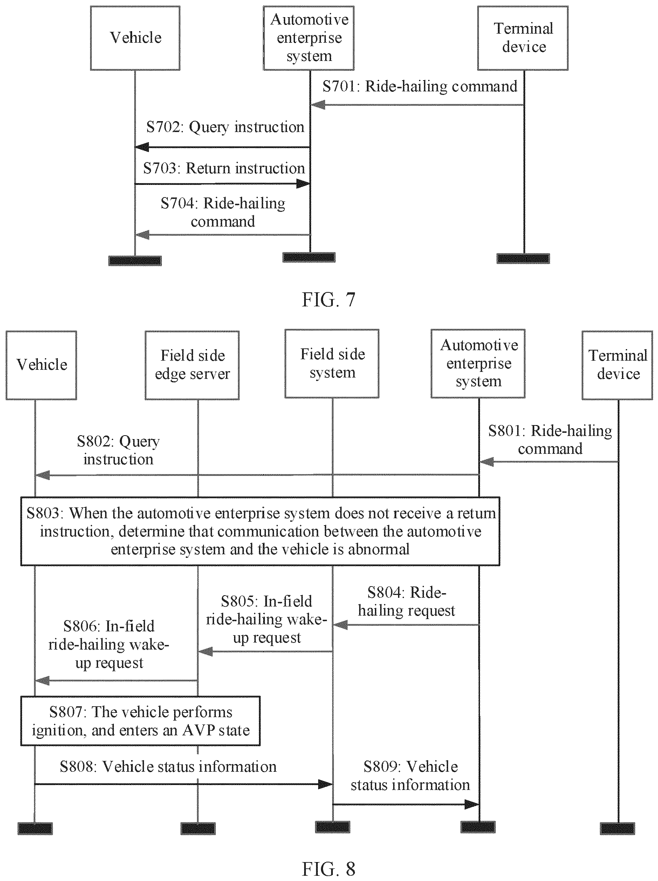

FIG. 7 is a schematic flowchart of an automatic ride-hailing method during normal communication according to an embodiment of this application. As shown in FIG. 7, the method includes the following steps.

S701: A terminal device sends a ride-hailing command to an automotive enterprise system.

S702: The automotive enterprise system sends a query instruction to a vehicle.

In an example, the query instruction may be vehicle status query information, to query a vehicle status.

S703: The vehicle sends a return instruction to the automotive enterprise system, where the return instruction is used to respond to the query instruction.

For example, the return instruction may be vehicle status information.

S704: The automotive enterprise system determines that communication on a primary channel is normal, and sends the ride-hailing command to the vehicle.

FIG. 8 is a schematic flowchart of a ride-hailing method during abnormal communication according to an embodiment of this application. As shown in FIG. 8, the method includes the following steps.

S801: A user sends a ride-hailing command to an automotive enterprise system by using a terminal device.

S802: The automotive enterprise system sends a query instruction to a vehicle.

S803: When the automotive enterprise system does not receive a return instruction sent by the vehicle, the automotive enterprise system determines that communication between the automotive enterprise system and the vehicle is abnormal, and therefore the automotive enterprise system needs to be switched to a field side system to continue to execute the command.

S804: The automotive enterprise system sends a ride-hailing request to the field side system.

S805: The field side system sends an in-field ride-hailing wake-up request to a field side edge server disposed near a parking lot.

S806: The field side edge server sends the in-field ride-hailing wake-up request to the vehicle.

S807: After receiving the in-field ride-hailing wake-up request, the vehicle starts to ignite, and starts an AVP state.

S808: The vehicle sends vehicle status information to the field side system through the field side edge server, to indicate that the vehicle starts the AVP state, where the vehicle status information indicates a current status of the vehicle.

S809: The field side system sends the vehicle status information to the automotive enterprise system.

It should be understood that the solution in FIG. 8 is merely used as an example for description. In practice, the method in FIG. 8 may include more or fewer steps, or appropriate variations may be made on several steps.

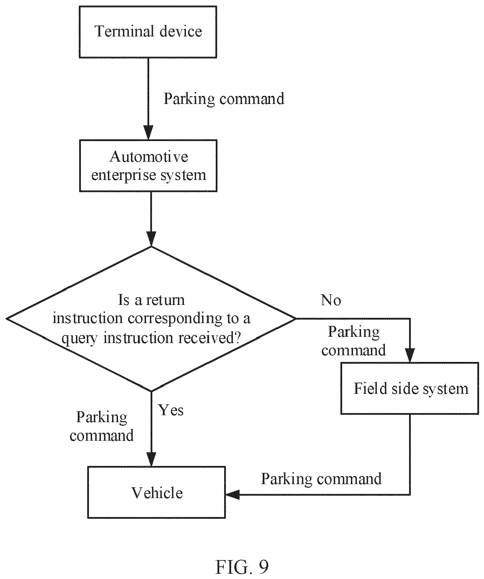

FIG. 9 is a schematic diagram of a scenario of an automatic parking method according to an embodiment of this application. As shown in FIG. 9, when a communication signal is normal, a parking command may be executed through a primary channel. A normal procedure is as follows: A user taps a link of the parking command in a shuttle area by using a terminal device, and the terminal device sends the parking command to an automotive enterprise system. The automotive enterprise system sends a query instruction to a vehicle. If the vehicle replies to the query instruction, communication between the automotive enterprise system and the vehicle is normal, and the parking command can be executed through the primary channel. Therefore, the automotive enterprise system sends the parking command to the vehicle. The vehicle automatically determines to enter an ignition state, and the vehicle is started to execute the parking command.

Still refer to FIG. 9. An abnormal procedure is as follows: A user taps the parking command by using a terminal device, and the terminal device sends the parking command to an automotive enterprise system. The automotive enterprise system sends a query instruction to a vehicle. If the vehicle does not reply to the query instruction, communication between the automotive enterprise system and the vehicle is abnormal. In this case, a channel needs to be switched to a secondary channel to execute the parking command. Therefore, the automotive enterprise system sends the parking command to a field side system, and the field side system executes the parking command.

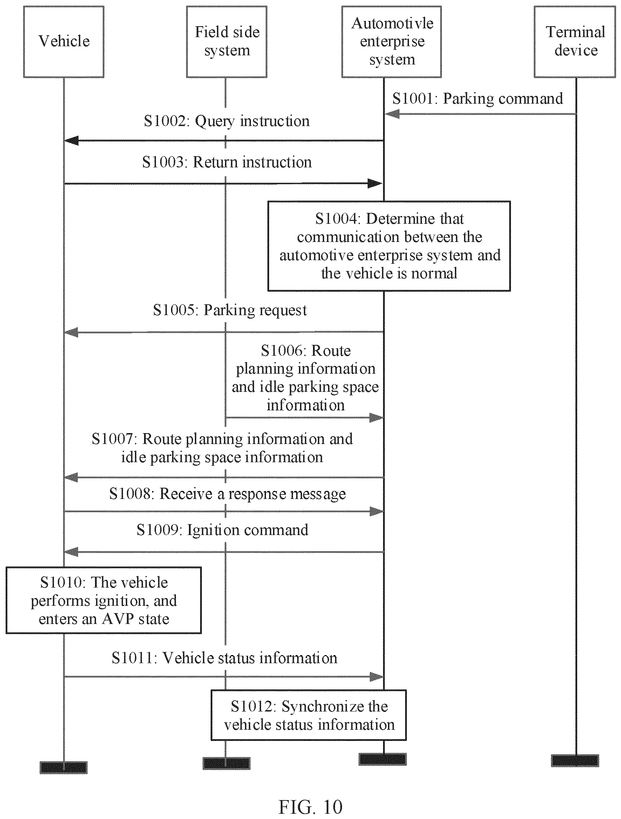

FIG. 10 is a schematic flowchart of a parking method in a normal procedure according to an embodiment of this application. As shown in FIG. 10, the method includes the following steps.

S1001: A user sends a parking command to an automotive enterprise system by using a terminal device.

For example, the user may get off in a shuttle area. After confirming that a vehicle door and a vehicle window are closed and completing operations such as stopping an engine and pulling out the vehicle key, the user may tap an icon of the parking command by using mobile phone software in the terminal device. The terminal device sends the parking command to the automotive enterprise system.

S1002: The automotive enterprise system sends a query instruction to a vehicle.

In an example, the query instruction may be vehicle status query information, to query a vehicle status.

S1003: The vehicle feeds back a return instruction to the automotive enterprise system.

For example, the feedback instruction may be vehicle status information. For example, the vehicle may perform self-check, and feed back vehicle status information to the automotive enterprise system.

S1004: After receiving the return instruction, the automotive enterprise system determines that communication between the automotive enterprise system and the vehicle is normal.

S1005: The automotive enterprise system sends a parking request to the vehicle.

S1006: A field side system sends route planning information and idle parking space information to the automotive enterprise system.

S1007: The automotive enterprise system sends the route planning information and the idle parking space information to the vehicle.

In some examples, in an automatic ride-hailing process or an automatic parking process, the automotive enterprise system may be used as a primary system to deliver sensing information, that is, the field side system sends the sensing information to the automotive enterprise system, and then the automotive enterprise system sends the sensing information to the vehicle, to improve consistency of vehicle control performed by the automotive enterprise system in a ride-hailing and parking process, and improve safety and reliability of the vehicle in the ride-hailing and parking process. However, in the following example, if the vehicle is in a normal driving process, the field side system may be used as a primary system to deliver the sensing information.

In some other examples, in an automatic ride-hailing process or an automatic parking process, the field side system may directly send the sensing information to the vehicle.

S1008: The vehicle sends receiving response information to the automotive enterprise system, to indicate that receiving of the route planning information and parking space attribute information is completed.

S1009: The automotive enterprise system sends an ignition command to the vehicle.

S1010: The vehicle performs ignition, and enters an AVP state.

S1011: The vehicle sends the vehicle status information to the automotive enterprise system, to indicate that the vehicle has entered the AVP state.

S1012: The automotive enterprise system and the field side system synchronize the vehicle status information.

It should be understood that the solution in FIG. 10 is merely used as an example for description. In practice, the method in FIG. 10 may include more or fewer steps, or appropriate variations may be made on several steps.

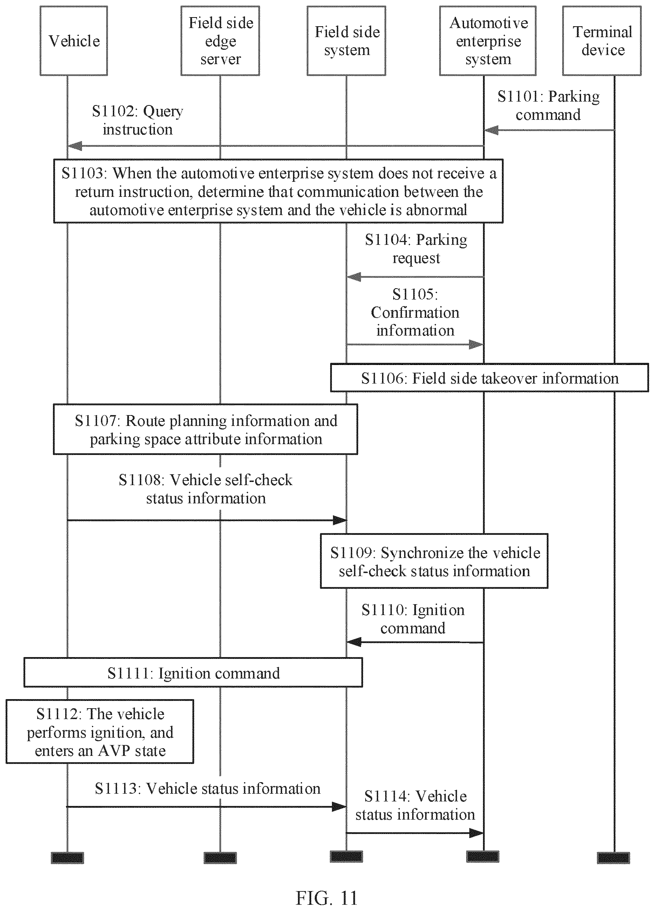

FIG. 11 is a schematic flowchart of an automatic parking method in an abnormal procedure according to an embodiment of this application. As shown in FIG. 11, the method includes the following steps.

S1101: A user sends a parking command to an automotive enterprise system by using a terminal device.

S1102: The automotive enterprise system sends a query instruction to a vehicle.

In an example, the query instruction may be vehicle status query information, to query a vehicle status.

S1103: When the automotive enterprise system does not receive a return instruction sent by the vehicle, the automotive enterprise system determines that communication between the automotive enterprise system and the vehicle is abnormal, and therefore a channel needs to be switched to a secondary channel.

For example, the return instruction may be vehicle status information.

S1104: The automotive enterprise system sends a parking request to a field side system.

S1105: The field side system sends confirmation information to the automotive enterprise system, to indicate that execution of the parking request is agreed.

S1106: The field side system sends field side takeover information to the terminal device through the automotive enterprise system, to notify the user that the field side system currently executes a ride-hailing command.

S1107: The field side system sends route planning information and idle parking space information to the vehicle by using a field side edge server.

S1108: The vehicle reports vehicle self-check status information to the field side system.

S1109: The field side system and the vehicle synchronize the vehicle self-check status information.

S1110: The automotive enterprise system sends an ignition command to the field side system.

S1111: The field side system sends the ignition command to the vehicle.

S1112: The vehicle performs ignition, and enters an AVP state.

S1113: The vehicle sends the vehicle status information to the field side system, to indicate that the vehicle has entered the AVP state.

S1114: The field side system and the vehicle system synchronize the vehicle status information.

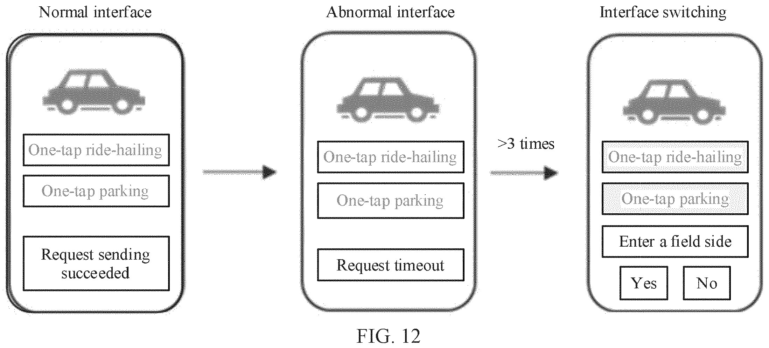

FIG. 12 is a schematic diagram of display interfaces of a terminal device during primary/secondary channel switching according to an embodiment of this application. As shown in FIG. 12, if a user taps a vehicle control command in an application icon in the terminal device, no response is received. In this case, an interface option may pop up in the display interface of a mobile phone application. The interface option includes confirming whether to enter field side system takeover. If the user confirms that the field side system takeover is entered, the field side system subsequently executes the vehicle control command. For example, as shown in FIG. 12, if no response is received after a quantity of times that the user taps the vehicle control command exceeds a preset quantity of times (for example, three times), the interface option may pop up in the display interface of a mobile phone application. That the vehicle control command is not responded may be understood as that communication between the terminal device and the automotive enterprise system is abnormal. Therefore, the field side system may take over communication with the terminal device.

In some examples, the user does not need to tap the vehicle control command in the application icon for a plurality of times. After the user taps the vehicle control command in the application icon, the terminal device may send the vehicle control command to the automotive enterprise system. If no response is received within preset time, the terminal device may continue to send the vehicle control command to the automotive enterprise system, and when no response is received after a quantity of times of sending the vehicle control command exceeds a preset quantity of times (for example, three times), the interface option pops up in the display interface of the mobile phone application, so that the user chooses whether to enter field side system takeover.

Alternatively, in some examples, if no response is received when the user taps the vehicle control command in the application icon in the terminal device, the terminal device may also enter field side system takeover by default, without confirmation by the user.

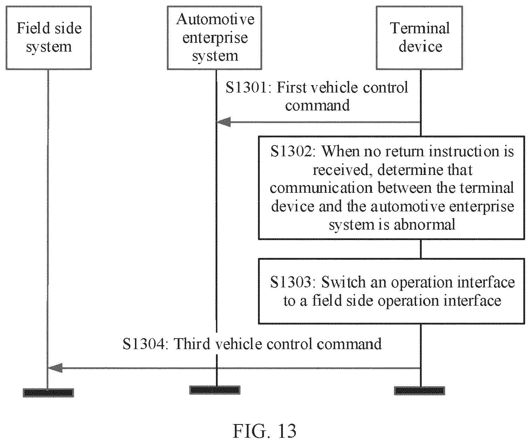

FIG. 13 is a schematic flowchart of a method for switching a primary/secondary channel on a terminal device side according to an embodiment of this application. The method includes the following steps.

S1301: After a user taps an icon of a vehicle control command on a vehicle side operation interface of a terminal device, the terminal device sends a first vehicle control command to an automotive enterprise system.

The vehicle side operation interface is an interface displaying an icon related to an operation of the automotive enterprise system.

S1302: If the terminal device does not receive, within time exceeding preset duration, a return instruction fed back by the automotive enterprise system, the terminal device determines that communication between the terminal device and the automotive enterprise system is abnormal.

S1303: The terminal device switches the operation interface to a field side operation interface.

The field side operation interface is an interface displaying an icon related to an operation of a field side system, and the field side system performs an operation related to a remote vehicle control command.

S1304: After the user taps an icon of a vehicle control command on the field side operation interface of the terminal device, the terminal device sends a third vehicle control command to the field side system.

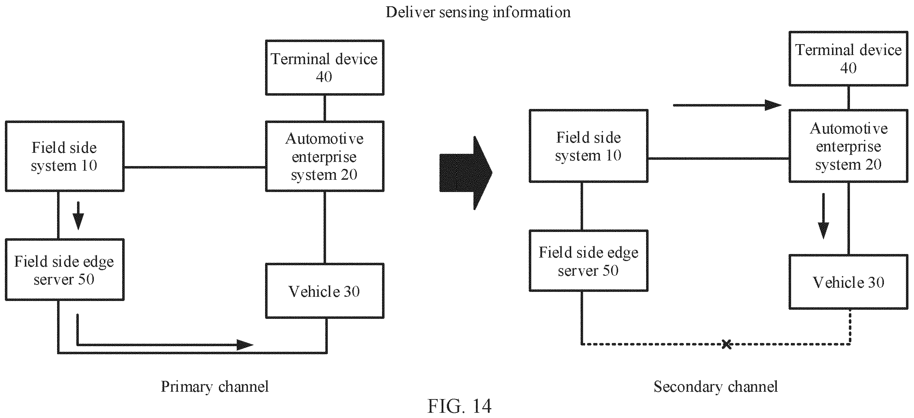

FIG. 14 is a flowchart of a method for delivering sensing information according to an embodiment of this application. For delivery of the sensing information, a field side system 10 is a primary system, and an automotive enterprise system 20 is a secondary system. In a normal procedure, the sensing information is delivered through the following primary channel: the field side system 10->a field side edge server 50->a vehicle 30. In an abnormal procedure, because a fault occurs in communication between the field side edge server 50 and the vehicle 30, the sensing information may be delivered through the secondary channel. The secondary channel is a channel from the field side system 10 to the automotive enterprise system 20 and to the vehicle 30.

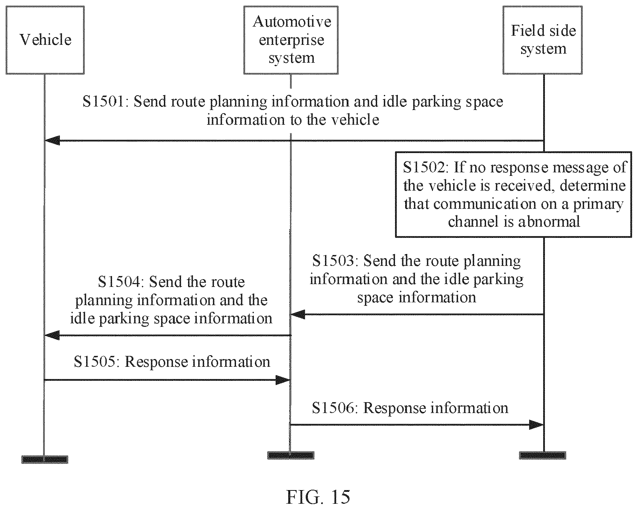

FIG. 15 is a schematic flowchart of delivering route planning information and idle parking space information according to an embodiment of this application.

S1501: A field side system sends the route planning information and the idle parking space information to a vehicle by using a field side edge server.

S1502: If the field side system does not receive response information fed back by the vehicle, it is determined that communication on a primary channel is abnormal, and the route planning information and the idle parking space information need to be delivered through a secondary channel.

In a specific example, if the response information of the vehicle is not received, the field side system may continue to send the route planning information and parking space attribute information to the vehicle through the primary channel until a quantity of sending times exceeds or is equal to a preset quantity of times (for example, three times). If the response information of the vehicle is still not received, it is determined that the communication is abnormal.

S1503: The field side system sends the route planning information and the idle parking space information to an automotive enterprise system.

S1504: The automotive enterprise system sends the route planning information and the idle parking space information to the vehicle.

S1505: The vehicle sends the response information to the automotive enterprise system.

The response information is used to confirm that the route planning information and the idle parking space information are received.

S1506: The automotive enterprise system sends the response information to the field side system.

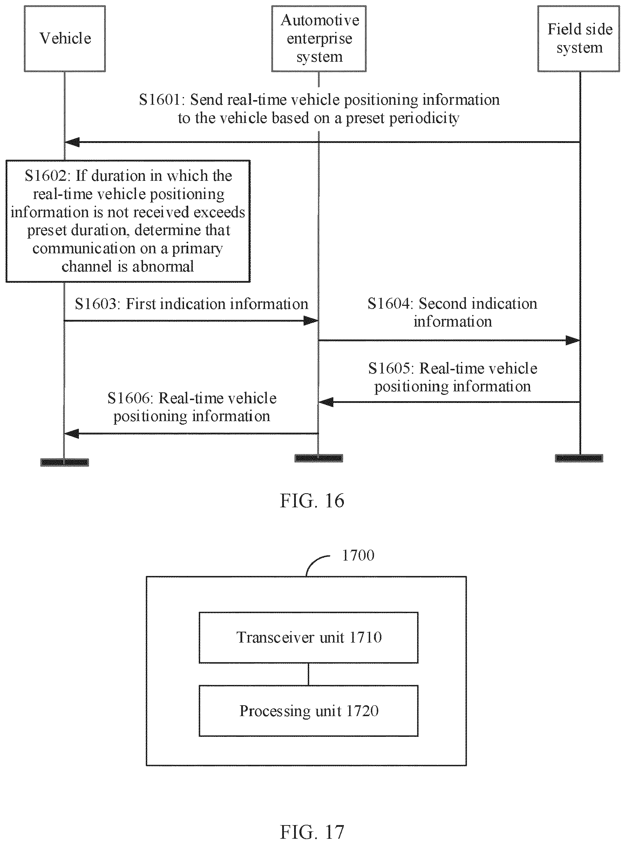

FIG. 16 is a schematic flowchart of a method for delivering real-time vehicle positioning information according to an embodiment of this application.

S1601: A field side system sends the real-time vehicle positioning information to a vehicle based on a preset periodicity.

S1602: If time in which the vehicle does not receive the real-time vehicle location information exceeds preset duration, determine that communication on a primary channel is abnormal.

For example, it is assumed that the field side system sends the real-time vehicle positioning information at a frequency of 100 milliseconds (ms). If the vehicle does not receive the real-time vehicle positioning information within duration of more than 1 second, it may be determined that communication on the primary channel is abnormal.

S1603: The vehicle sends first indication information to an automotive enterprise system, to indicate that the vehicle does not receive the real-time vehicle positioning information.

S1604: The automotive enterprise system sends second indication information to the field side system, where the second indication information indicates that the vehicle does not receive the real-time vehicle positioning information.

S1605: After receiving the second indication information, the field side system sends the real-time vehicle positioning information to the automotive enterprise system.

That is, a path for the field side system to send the real-time vehicle positioning information to the automotive enterprise system is switched from the primary channel to a secondary channel.

S1606: The automotive enterprise system sends the real-time vehicle positioning information to the vehicle.

FIG. 17 is a schematic block diagram of an apparatus 1700 for controlling a vehicle according to an embodiment of this application. The apparatus 1700 includes a transceiver unit 1710 and a processing unit 1720. The transceiver unit 1710 may be configured to implement a corresponding function of communication, and the processing unit 1720 may be configured to perform data processing. The transceiver unit 1710 may also be referred to as a communication interface or a communication unit.

Optionally, the apparatus 1700 further includes a storage unit. The storage unit may be configured to store instructions and/or data. The processing unit 1720 may read the instructions and/or the data in the storage unit, so that the apparatus implements actions of the field side system, the automotive enterprise system, the vehicle, or the terminal device in the foregoing method embodiments.

In a first design, the apparatus 1700 may be the field side system in the foregoing embodiments, or may be a component (for example, a chip) of the field side system. The apparatus 1700 may implement steps or procedures performed by the field side system corresponding to the foregoing method embodiments. The transceiver unit 1710 is configured to perform related receiving and sending operations of the field side system in the foregoing method embodiments, and the processing unit 1720 is configured to perform related processing operations of the field side system in the foregoing method embodiments.

In a second design, the apparatus 1700 may be the automotive enterprise system in the foregoing embodiments, or may be a component (for example, a chip) of the automotive enterprise system. The apparatus 1700 may implement steps or procedures performed by the automotive enterprise system corresponding to the foregoing method embodiments. The transceiver unit 1710 is configured to perform related receiving and sending operations of the automotive enterprise system in the foregoing method embodiments, and the processing unit 1720 is configured to perform related processing operations of the automotive enterprise system in the foregoing method embodiments.

In a third design, the apparatus 1700 may be the terminal device in the foregoing embodiments, or may be a component (for example, a chip) of the terminal device. The apparatus 1700 may implement steps or procedures performed by the terminal device corresponding to the foregoing method embodiments. The transceiver unit 1710 is configured to perform related receiving and sending operations of the terminal device in the foregoing method embodiments, and the processing unit 1720 is configured to perform related processing operations of the terminal device in the foregoing method embodiments.

In a fourth design, the apparatus 1700 may be the vehicle in the foregoing embodiments, or may be a component (for example, a chip) of the vehicle. The apparatus 1700 may implement steps or procedures performed by the vehicle corresponding to the foregoing method embodiments. The transceiver unit 1710 is configured to perform related receiving and sending operations of the vehicle in the foregoing method embodiments, and the processing unit 1720 is configured to perform related processing operations of the vehicle in the foregoing method embodiments.

It should be understood that a specific process in which the units perform the foregoing corresponding steps is described in detail in the foregoing method embodiments. For brevity, details are not described herein.

It should be further understood that the apparatus 1700 herein is presented in a form of a functional unit. A term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 1700 may be specifically the field side system in the foregoing embodiment, and may be configured to perform the procedures and/or steps corresponding to the field side system in the foregoing method embodiments; or the apparatus 1700 may be specifically the automotive enterprise system in the foregoing embodiments, and may be configured to perform the procedures and/or steps corresponding to the automotive enterprise system in the foregoing method embodiments. To avoid repetition, details are not described herein again.

The apparatus 1700 in the foregoing solution has a function of implementing corresponding steps performed by each system or device (for example, the field side system, the automotive enterprise system, the vehicle, or the terminal device) in the foregoing method. The function may be implemented by hardware, or may be implemented by hardware by executing corresponding software. The hardware or the software includes one or more modules corresponding to the foregoing function. For example, the transceiver unit 1710 may be replaced with a transceiver or a communication interface (for example, a sending unit in the transceiver unit 1710 may be replaced with a transmitter, and a receiving unit in the transceiver unit 1710 may be replaced with a receiver), and other units such as the processing unit 1720 and the like may be replaced with a processor, to separately perform a receiving/sending operation and a related processing operation in each method embodiment.

In addition, the transceiver unit 1710 may alternatively be a transceiver circuit (for example, may include a receiving circuit and a sending circuit), and the processing unit 1720 may be a processing circuit.

It should be noted that the apparatus 1700 in FIG. 17 may be the field side system, the automotive enterprise system, the vehicle, or the terminal device in the foregoing embodiment, or may be a chip or a chip system, for example, a system on chip (system on chip, SoC). The transceiver unit 1710 may be an input/output circuit or a communication interface. The processing unit 1720 is a processor, a microprocessor, or an integrated circuit integrated on the chip. This is not limited herein.

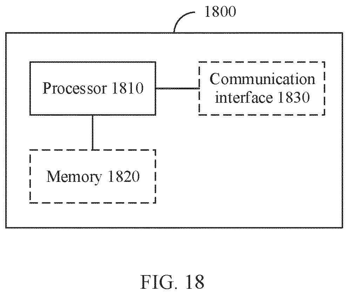

FIG. 18 shows an apparatus 1800 for controlling a vehicle according to another embodiment of this application. The apparatus 1800 includes a processor 1810. The processor 1810 is configured to execute a computer program or instructions stored in a memory 1820, or read data stored in the memory 1820, to perform the methods in the foregoing method embodiments. Optionally, there are one or more processors 1810.

Optionally, as shown in FIG. 18, the apparatus 1800 further includes the memory 1820, and the memory 1820 is configured to store a computer program or instructions and/or data. The memory 1820 may be integrated with the processor 1810, or may be disposed separately. Optionally, there are one or more memories 1820.

Optionally, as shown in FIG. 18, the apparatus 1800 further includes a communication interface 1830. The communication interface 1830 is configured to receive and/or send a signal. For example, the processor 1810 is configured to control the communication interface 1830 to receive and/or send a signal.

In a first solution, the apparatus 1800 is configured to implement operations performed by the field side system in the foregoing method embodiments.

For example, the processor 1810 is configured to execute a computer program or instructions stored in the memory 1820, to implement related operations of the field side system in the foregoing method embodiments, for example, the methods performed by the field side system in embodiments shown in FIG. 2 to FIG. 6, FIG. 8 to FIG. 11, and FIG. 13 to FIG. 16.

In a second solution, the apparatus 1800 is configured to implement operations performed by the automotive enterprise system in the foregoing method embodiments.

For example, the processor 1810 is configured to execute a computer program or instructions stored in the memory 1820, to implement related operations of the automotive enterprise system in the foregoing method embodiments, for example, the methods performed by the automotive enterprise system in embodiments shown in FIG. 2 to FIG. 11 and FIG. 13 to FIG. 16.

In a third solution, the apparatus 1800 is configured to implement operations performed by the terminal device in the foregoing method embodiments.

For example, the processor 1810 is configured to execute a computer program or instructions stored in the memory 1820, to implement related operations of the terminal device in the foregoing method embodiments, for example, the methods performed by the terminal device in embodiments shown in FIG. 2 to FIG. 3 and FIG. 5 to FIG. 14.

In a fourth solution, the apparatus 1800 is configured to implement operations performed by the vehicle in the foregoing method embodiments.

For example, the processor 1810 is configured to execute a computer program or an instruction stored in the memory 1820, to implement related operations of the vehicle in the foregoing method embodiments, for example, the methods performed by the vehicle in embodiments shown in FIG. 2 to FIG. 11, FIG. 12, and FIG. 14 to FIG. 16.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache.

By way of example rather than limitation, the RAM includes the following forms: static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchronous attached dynamic random access memory (synchlink DRAM, SLDRAM), and direct memory bus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification aims to include but is not limited to these memories and any memory of another proper type.

An embodiment of this application further provides a computer-readable storage medium. The computer-readable storage medium stores computer instructions used to implement the method performed by the field side system, the automotive enterprise system, the vehicle, or the terminal device in the foregoing method embodiments.

For example, when the computer program is executed by a computer, the computer can implement the method performed by the field side system, the automotive enterprise system, the vehicle, or the terminal device in the foregoing method embodiments.

An embodiment of this application further provides a computer program product, including instructions. When the instructions are executed by a computer, the method performed by the field side system, the automotive enterprise system, the vehicle, or the terminal device in the foregoing method embodiments is implemented.

For explanations and beneficial effects of related content of any one of the apparatuses provided above, refer to the corresponding method embodiment provided above. Details are not described herein again.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A vehicle control method, comprising:
when communication between an automotive enterprise system and a vehicle is abnormal, receiving, by a field side system, a second vehicle control command sent by the automotive enterprise system, wherein the second vehicle control command instructs the field side system to control the vehicle to execute a task related to vehicle driving; and
controlling, by the field side system based on the second vehicle control command, the vehicle to execute a task instructed by the second vehicle control command, wherein the automotive enterprise system comprises a management system for remotely controlling the vehicle by an automotive enterprise, and the field side system comprises at least one of a management system of a road side unit and a management system of a parking lot.

2. The method according to claim 1, wherein the second vehicle control command comprises at least one of the following:
a ride-hailing request, used to request to perform a ride-hailing operation on the vehicle;
a parking request, used to request to perform a parking operation on the vehicle;
an ignition command that instructs to perform an ignition operation on the vehicle;
an engine-stopping command that instructs to perform an engine-stopping operation on the vehicle;
a steering command that instructs to perform a steering operation on the vehicle;
a throttle command that instructs to perform an operation of throttling up the engine or throttling down the engine on the vehicle; or
a braking command that instructs the vehicle to perform a braking operation.

3. The method according to claim 1 or 2, wherein the second vehicle control command is the ride-hailing request or the parking request, and the controlling, by the field side system based on the second vehicle control command, the vehicle to execute a task instructed by the second vehicle control command comprises:
sending, by the field side system, route planning information and idle parking space information to the vehicle based on the second vehicle control command;
receiving, by the field side system, the ignition command from the automotive enterprise system; and
sending, by the field side system, the ignition command to the vehicle.

4. The method according to claim 3, wherein the controlling, by the field side system based on the second vehicle control command, the vehicle to execute a task instructed by the second vehicle control command further comprises:
receiving, by the field side system, vehicle self-check status information from the vehicle, wherein the vehicle self-check status information indicates a self-check status of the vehicle; and
sending, by the field side system, the vehicle self-check status information to the automotive enterprise system; and
the receiving, by the field side system, the ignition command from the automotive enterprise system comprises:
receiving, by the field side system, the ignition command from the automotive enterprise system after sending the vehicle self-check status information.

5. A vehicle control method, comprising:
when communication between an automotive enterprise system and a terminal device is abnormal, receiving, by a field side system, a third vehicle control command sent by the terminal device, wherein the third vehicle control command instructs the field side system to control a vehicle to execute a task related to vehicle driving; and
controlling, by the field side system based on the third vehicle control command, the vehicle to execute a task instructed by the third vehicle control command, wherein the automotive enterprise system comprises a management system for remotely controlling the vehicle by an automotive enterprise, the field side system comprises at least one of a management system of a road side unit and a management system of a parking lot, and the terminal device corresponds to the vehicle.

6. The method according to claim 5, wherein the third vehicle control command comprises at least one of the following:
a ride-hailing command that instructs to perform a ride-hailing operation on the vehicle;
a parking command that instructs to perform a parking operation on the vehicle;
an ignition command that instructs to perform an ignition operation on the vehicle;
an engine-stopping command that instructs to perform an engine-stopping operation on the vehicle;
a steering command that instructs to perform a steering operation on the vehicle;
a throttle command that instructs to perform an operation of throttling up the engine or throttling down the engine on the vehicle; or
a braking command that instructs the vehicle to perform a braking operation.

7. A vehicle control method, comprising:
sending, by a field side system, sensing information to a vehicle when communication between the field side system and the vehicle is normal, wherein the sensing information indicates reference information required when the vehicle travels; or
sending, by the field side system, the sensing information to an automotive enterprise system when the communication between the field side system and the vehicle is abnormal, wherein the automotive enterprise system comprises a management system for remotely controlling the vehicle by an automotive enterprise, and the field side system comprises at least one of a management system of a road side unit and a management system of a parking lot.

8. The method according to claim 7, wherein the sensing information comprises at least one of the following:
idle parking space information that indicates a parking space that is not occupied by the vehicle in the parking lot;
route planning information that indicates a driving route of the vehicle from a current location to a destination;
real-time vehicle positioning information that indicates a real-time location of the vehicle in a driving process; or
obstacle sensing and location information that indicates a location of an obstacle in a driving process of the vehicle.

9. The method according to claim 7 or 8, wherein the method further comprises:
determining, by the field side system, whether the communication between the field side system and the vehicle is normal.

10. The method according to claim 9, wherein the determining, by the field side system, whether the communication between the field side system and the vehicle is normal comprises:
sending, by the field side system, a query instruction to the vehicle; and
when the field side system receives a return instruction from the vehicle within preset time, determining, by the field side system, that a function of the communication between the field side system and the vehicle is normal, wherein the return instruction is used to respond to the query instruction; or
when the field side system does not receive the return instruction from the vehicle within preset time, determining, by the field side system, that the function of the communication between the field side system and the vehicle is abnormal.

11. The method according to claim 9, wherein the determining, by the field side system, whether the communication between the field side system and the vehicle is normal comprises:
continuously sending, by the field side system, N query instructions to the vehicle, wherein N is a preset integer greater than or equal to 2; and
when the field side system has received, from the vehicle, a return instruction corresponding to at least one of the N query instructions, determining, by the field side system, that a function of the communication between the field side system and the vehicle is normal, wherein the return instruction is used to respond to the query instruction; or
when the field side system does not receive, from the vehicle, return instructions corresponding to the N query instructions, determining, by the field side system, that the function of the communication between the field side system and the vehicle is abnormal.

12. The method according to claim 9, wherein the determining, by the field side system, whether the communication between the field side system and the vehicle is normal comprises:
receiving, by the field side system, second indication information from the automotive enterprise system, wherein the second indication information indicates that the vehicle does not receive the sensing information sent by the field side system based on a preset periodicity; and
determining, by the field side system based on the second indication information, that the communication between the field side system and the vehicle is abnormal.

13. A vehicle control method, comprising:
receiving, by an automotive enterprise system, a first vehicle control command from a terminal device, wherein the first vehicle control command instructs the automotive enterprise system to control a vehicle to execute a task related to vehicle driving, and the terminal device corresponds to the vehicle; and
when communication between the automotive enterprise system and the vehicle is normal, controlling, by the automotive enterprise system based on the first vehicle control command, the vehicle to execute a task instructed by the first vehicle control command; or
when the communication between the automotive enterprise system and the vehicle is abnormal, sending, by the automotive enterprise system, a second vehicle control command to a field side system based on the first vehicle control command, wherein the second vehicle control command instructs the field side system to control the vehicle to execute the task related to vehicle driving, the automotive enterprise system comprises a management system for remotely controlling the vehicle by an automotive enterprise, and the field side system comprises at least one of a management system of a road side unit and a management system of a parking lot.

14. A vehicle control method, comprising:
when communication between an automotive enterprise system and a terminal device is normal, sending, by the terminal device, a first vehicle control command to the automotive enterprise system, wherein the first vehicle control command instructs the automotive enterprise system to control a vehicle to execute a task related to vehicle driving; or
when the communication between the automotive enterprise system and the terminal device is abnormal, sending, by the terminal device, a third vehicle control command to a field side system, wherein the third vehicle control command instructs the field side system to control the vehicle to execute the task related to vehicle driving, the automotive enterprise system comprises a management system for remotely controlling the vehicle by an automotive enterprise, the field side system comprises at least one of a management system of a road side unit and a management system of a parking lot, and the terminal device corresponds to the vehicle.

15. A field side system, wherein the field side system comprises:
a communication interface; and
a processor, configured to invoke a computer program from a memory, wherein when the computer program is executed, the processor is enabled to perform the following steps:
when communication between an automotive enterprise system and a vehicle is abnormal, receiving, through the communication interface, a second vehicle control command sent by the automotive enterprise system, wherein the second vehicle control command instructs the field side system to control the vehicle to execute a task related to vehicle driving; and
controlling, based on the second vehicle control command, the vehicle to execute a task instructed by the second vehicle control command, wherein the automotive enterprise system comprises a management system for remotely controlling the vehicle by an automotive enterprise, and the field side system comprises at least one of a management system of a road side unit and a management system of a parking lot.

16. The field side system according to claim 15, wherein the second vehicle control command comprises at least one of the following:
a ride-hailing request, used to request to perform a ride-hailing operation on the vehicle;
a parking request, used to request to perform a parking operation on the vehicle;
an ignition command that instructs to perform an ignition operation on the vehicle;
an engine-stopping command that instructs to perform an engine-stopping operation on the vehicle;
a steering command that instructs to perform a steering operation on the vehicle;
a throttle command that instructs to perform an operation of throttling up the engine or throttling down the engine on the vehicle; or
a braking command that instructs the vehicle to perform a braking operation.

17. The field side system according to claim 15 or 16, wherein the second vehicle control command is a ride-hailing request or a parking request, and the processor is specifically configured to: send route planning information and idle parking space information to the vehicle based on the second vehicle control command through the communication interface; receive an ignition command from the automotive enterprise system through the communication interface; and send the ignition command to the vehicle through the communication interface.

18. The field side system according to claim 17, wherein the processor is further configured to: receive vehicle self-check status information from the vehicle through the communication interface, wherein the vehicle self-check status information indicates a self-check status of the vehicle; and send the vehicle self-check status information to the automotive enterprise system through the communication interface; and
the processor is specifically configured to: after sending the vehicle self-check status information through the communication interface, receive the ignition command from the automotive enterprise system through the communication interface.

19. Afield side system, comprising:
a communication interface; and
a processor, configured to invoke a computer program from a memory, wherein when the computer program is executed, the processor is enabled to perform the following steps:
when communication between an automotive enterprise system and a terminal device is abnormal, receiving, through the communication interface, a third vehicle control command sent by the terminal device, wherein the third vehicle control command instructs the field side system to control a vehicle to execute a task related to vehicle driving; and
controlling, based on the third vehicle control command, the vehicle to execute a task instructed by the third vehicle control command, wherein the automotive enterprise system comprises a management system for remotely controlling the vehicle by an automotive enterprise, the field side system comprises at least one of a management system of a road side unit and a management system of a parking lot, and the terminal device corresponds to the vehicle.

20. The field side system according to claim 19, wherein the third vehicle control command comprises at least one of the following:
a ride-hailing command that instructs to perform a ride-hailing operation on the vehicle;
a parking command that instructs to perform a parking operation on the vehicle;
an ignition command that instructs to perform an ignition operation on the vehicle;
an engine-stopping command that instructs to perform an engine-stopping operation on the vehicle;
a steering command that instructs to perform a steering operation on the vehicle;
a throttle command that instructs to perform an operation of throttling up the engine or throttling down the engine on the vehicle; or
a braking command that instructs the vehicle to perform a braking operation.

21. A field side system, comprising:
a communication interface; and
a processor, configured to invoke a computer program from a memory, wherein when the computer program is executed, the processor is enabled to perform the following step:
sending sensing information to a vehicle through the communication interface when communication between the field side system and the vehicle is normal, wherein the sensing information indicates reference information required when the vehicle travels; or
sending the sensing information to an automotive enterprise system through the communication interface when the communication between the field side system and the vehicle is abnormal, wherein the automotive enterprise system comprises a management system for remotely controlling the vehicle by an automotive enterprise, and the field side system comprises at least one of a management system of a road side unit and a management system of a parking lot.

22. The field side system according to claim 21, wherein the sensing information comprises at least one of the following:
idle parking space information that indicates a parking space that is not occupied by the vehicle in the parking lot;
route planning information that indicates a driving route of the vehicle from a current location to a destination;
real-time vehicle positioning information that indicates a real-time location of the vehicle in a driving process; or
obstacle sensing and location information that indicates a location of an obstacle in a driving process of the vehicle.

23. The field side system according to claim 21 or 22, wherein the processor is further configured to determine whether the communication between the field side system and the vehicle is normal.

24. The field side system according to claim 23, wherein the processor is specifically configured to: send a query instruction to the vehicle through the communication interface; and when a return instruction is received from the vehicle within preset time, determine that a function of the communication between the field side system and the vehicle is normal, wherein the return instruction is used to respond to the query instruction; or when no return instruction is received from the vehicle within preset time, determine that the function of the communication between the field side system and the vehicle is abnormal.

25. The field side system according to claim 23, wherein the processor is specifically configured to: continuously send N query instructions to the vehicle through the communication interface, wherein N is a preset integer greater than or equal to 2; and when a return instruction corresponding to at least one of the N query instructions has been received from the vehicle, determine that a function of the communication between the field side system and the vehicle is normal, wherein the return instruction is used to respond to the query instruction; or when no return instructions corresponding to the N query instructions are received from the vehicle, determine that the function of the communication between the field side system and the vehicle is abnormal.

26. The field side system according to claim 23, wherein the processor is specifically configured to: receive second indication information from the automotive enterprise system through the communication interface, wherein the second indication information indicates that the vehicle does not receive the sensing information sent by the field side system based on a preset periodicity; and determine, based on the second indication information, that the communication between the field side system and the vehicle is abnormal.

27. An automotive enterprise system, comprising:
a communication interface; and
a processor, configured to invoke a computer program from a memory, wherein when the computer program is executed, the processor is enabled to perform the following steps:
receiving a first vehicle control command from a terminal device through the communication interface, wherein the first vehicle control command instructs the automotive enterprise system to control a vehicle to execute a task related to vehicle driving, and the terminal device corresponds to the vehicle; and
when communication between the automotive enterprise system and the vehicle is normal, controlling, based on the first vehicle control command, the vehicle to execute a task instructed by the first vehicle control command; or
when the communication between the automotive enterprise system and the vehicle is abnormal, sending a second vehicle control command to a field side system based on the first vehicle control command, wherein the second vehicle control command instructs the field side system to control the vehicle to execute the task related to vehicle driving, the automotive enterprise system comprises a management system for remotely controlling the vehicle by an automotive enterprise, and the field side system comprises at least one of a management system of a road side unit and a management system of a parking lot.

28. A terminal device, comprising:
a communication interface; and
a processor, configured to invoke a computer program from a memory, wherein when the computer program is executed, the processor is enabled to perform the following step:
when communication between an automotive enterprise system and a terminal device is normal, sending a first vehicle control command to the automotive enterprise system through the communication interface, wherein the first vehicle control command instructs the automotive enterprise system to control a vehicle to execute a task related to vehicle driving; or
when the communication between the automotive enterprise system and the terminal device is abnormal, sending a third vehicle control command to a field side system through the communication interface, wherein the third vehicle control command instructs the field side system to control the vehicle to execute a task related to vehicle driving, the automotive enterprise system comprises a management system for remotely controlling the vehicle by an automotive enterprise, the field side system comprises at least one of a management system of a road side unit and a management system of a parking lot, and the terminal device corresponds to the vehicle.
